(19) Europäisches Patentamt
European Patent Office
Office européen des brevets

(11) EP 2 042 578 A1

(12) **EUROPÄISCHE PATENTANMELDUNG**

(43) Veröffentlichungstag:
**01.04.2009 Patentblatt 2009/14**

(51) Int Cl.:
***C09J 7/02*** ***(2006.01)*** ***B32B 7/12*** ***(2006.01)***

(21) Anmeldenummer: **08105290.4**

(22) Anmeldetag: **10.09.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **20.09.2007 DE 102007045166**

(71) Anmelder: **tesa AG**
**20253 Hamburg (DE)**

(72) Erfinder:
- **Husemann, Dr. Marc**
**22605, Hamburg (DE)**
- **Dalmis, Gabriel**
**22459, Hamburg (DE)**

(54) **Transparentes Klebeband**

(57) Vorgestellt wird ein einseitig verklebbares transparentes Flächenelement mit einem Träger und einer Klebemasse, das als Splittersicherungseinrichtung für spröde Flächenkörper eingesetzt wird. Die Oberfläche des Trägers ist dabei mittels eines temporären Abdeckungsmittels gegenüber Beschädigung geschützt. Das temporäre Abdeckungsmittel ist derart ausgebildet, dass es rückstandsfrei ablösbar mit dem Träger verbunden ist und daher optimale Transparenz des Flächenelements nach Ablösen des temporären Abdeckungsmittels gewährleistet.

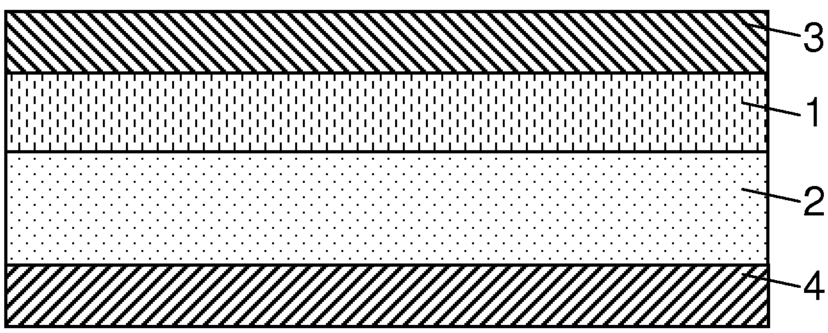


Fig. 1

EP 2 042 578 A1

## Beschreibung

Die Erfindung liegt auf dem Gebiet der angewandten Polymertechnik und betrifft ein ausschließlich einseitig verklebbares Flächenelement umfassend einen Träger und eine Klebeschichtung, wobei der Träger parallel zu seiner Hauptausdehnung eine erste Seitenfläche sowie eine zweite Seitenfläche aufweist und die Klebeschichtung an der ersten Seitenfläche des Trägers angeordnet und zu einem dauerhaften Verbinden des Flächenelements mit einem bei Bruch mittels des Flächenelements zusammenzuhaltenden spröden Flächenkörper angepasst ist. Ferner betrifft die Erfindung einen Klebeverbund aus einem derartigen Flächenelement und einem Durchsichtelement sowie ein Anzeigesystem mit einem solchen Klebeverbund und einer Anzeigeeinrichtung sowie ein Verfahren zur Herstellung eines derartigen Anzeigesystems. Schließlich betrifft die Erfindung die Verwendung eines Flächenelements als Splittersicherungseinrichtung für einen spröden Flächenkörper, die bei Bruch des Flächenkörpers den Flächenkörper zumindest im wesentlichen zusammen hält und so einer Vereinzelung von Bruchstücken des Flächenkörpers entgegenwirkt, sowie die Verwendung eines Klebeverbunds als Beschädigungsschutzvorrichtung für eine Anzeigeeinrichtung in einem Anzeigesystem, die einer Beschädigung der Anzeigeeinrichtung bei äußerer mechanischer Einwirkung entgegenwirkt.

Nahezu alle Geräte der modernen Unterhaltungselektronik weisen heute visuelle Anzeigesysteme zur Anzeige des Betriebszustands des Geräts oder weiterer Informationen auf. Sind dabei komplexere Zusammenhänge darzustellen, so werden zur Anzeige häufig Anzeigemodule auf der Grundlage von Flüssigkristallen (LCD) oder von organischen Leuchtdioden (OLED) eingesetzt. Solche Anzeigen kommen etwa bei Digitalkameras, tragbaren Kleinstcomputern und Mobiltelefonen zum Einsatz.

Zum Schutz der Anzeigemodule vor einer etwaigen Beschädigung durch äußere mechanische Einwirkung wie zum Beispiel Stößen weisen derartige Anzeigesysteme üblicherweise transparente Schutzfenster auf, die die Außenseite der Anzeigemodule bedecken und so die Gefahr einer direkten Einwirkung auf das Modul vermindern. Ein derartiger Schutz ist ebenfalls bei anderen visuellen Anzeigesystemen erforderlich, etwa bei mechanischen Anzeigen wie etwa Uhren oder Füllstandsanzeigen an Vorratsgefäßen.

Als Schutzfenster werden üblicherweise Polymerscheiben oder Glasscheiben eingesetzt, wobei jedes der beiden Systeme Vor- und Nachteile aufweist und daher entsprechend der konkreten Anwendung auszuwählen ist.

So sind Polymerscheiben zwar kostengünstig sowie leicht zu verarbeiten und bieten einen effizienten Schutz gegenüber mechanischen Einwirkungen, haben aber den Nachteil, dass sie üblicherweise nicht kratzfest sind und daher leicht beschädigt werden. Dies führt bereits nach kurzer Zeit nicht nur zu einer Verschlechterung des ästhetischen Eindrucks der Anzeigesysteme, sondern hat darüber hinaus auch eine verminderte Sicht auf den Anzeigebereich der Anzeigemodule zur Folge. Zudem sind viele gängige Polymere nur eingeschränkt gegenüber ultraviolettem Licht (UV-Licht) oder organischen Lösemitteln beständig.

Auf der anderen Seite sind Schutzfenster aus Glas inert gegenüber organischen Lösemitteln und infolge der großen Härte auch kratzbeständig, wodurch sie einen hochwertigen Eindruck zu vermitteln vermögen. Aufgrund der aus der Härte resultierenden Sprödigkeit dieses Materials ist Glas jedoch nur eingeschränkt als Schutz gegenüber mechanischen Einwirkungen wie Stoß oder Schlag geeignet, da es bereits bei schwachen Beanspruchungen zu einem splitternden Sprödbruch der Glasscheibe kommen kann. Neben der nur eingeschränkten Schutzwirkung ergibt sich demnach die Gefahr von Verletzungen durch die dabei entstehenden Splitter sowie die Gefahr einer Beschädigung des Anzeigemoduls durch die scharfkantigen Bruchstücke.

Um die Auswirkungen eines derartigen Bruchs von Glas zu vermindern wird bei vielen Anwendungen ein Verbundglas eingesetzt, das aus übereinander angeordneten und miteinander vollflächig verklebten einzelnen Glasscheiben besteht. Zur Strukturverstärkung weisen Verbundgläser darüber hinaus zwischen den Glasscheiben in der Verklebung häufig Folien aus Polymeren wie etwa Polyvinylbutyral auf. Es wird also insgesamt ein (mindestens) dreilagiges Verbundsystem gebildet wird. Zwar kann es auch bei einem derartigem Glasverbund grundsätzlich zu einem Bruch der einzelnen Glasscheiben kommen, jedoch wird aufgrund der Verklebung der Glasscheiben untereinander (sowie gegebenenfalls der Zwischenfolien) die Gefahr eines Ablösens der Bruchstücke aus dem Verbund verringert und somit einer Splitterbildung entgegengewirkt.

Für mobile Anwendungen ist ein derartiges Verbundglas jedoch aufgrund seines hohen Gewichts sowie der teureren Fertigung nachteilig. Daher wird als Schutzfenster häufig ein Verbund aus jeweils einer einzigen Glasscheibe mit einer Klebefoliefolie eingesetzt. Die Klebefolie besteht dabei aus einem stabilen Träger aus einer Polymerfolie, der einseitig eine Klebemasse aufweist, über die der Träger mit der Glasscheibe verbunden wird. Das so erhaltene Verbund-Schutzfenster besitzt demnach eine kratzfeste Seite mit einer Oberfläche aus Glas und eine Seite mit der Polymerfolie als Oberfläche.

Beim Einbau in das Anzeigesystem wird das Verbund-Schutzfenster mit der kratzfesten Glasseite nach außen im System befestigt, so dass die Seite mit der leichter beschädigbaren Polymerfolie nach innen und somit zum Anzeigemodul hin gerichtet ist. Durch diese Anordnung des asymmetrisch aufgebauten Verbunds ist es möglich, beim häufigen Gebrauch des Gerätes mit dem Anzeigesystem ein Verkratzen der Oberfläche des Schutzfensters zu vermeiden.

Jedoch kann auch bei einem derartigen System die Gefahr eines Verkratzens des Schutzfensters während

des Verarbeitungsprozesses nicht ausgeschlossen werden, nämlich an der später dem Anzeigemodul zugewandten Seite, die den Polymerträger aufweist. So tritt der Polymerträger insbesondere beim Stanzen oder Schneiden der Polymerfolie, beim Auftragen und Fixieren der Polymerfolie an Glas oder beim Abtrennen und Zuschneiden des Schutzfensters mit Schneidklingen, Haltevorrichtungen, Rollwalzen oder anderen Werkzeugen in Kontakt, wobei es zu einer Beschädigung der Oberfläche des Polymerträgers kommen kann.

Auch derartige, in dem letztendlichen Produkt an der Innenseite innen vorhandene Kratzer beeinträchtigen die Sichtbarkeit der auf dem Anzeigemodul angezeigten Informationen. Die dabei auftretenden Beeinträchtigungen können infolge der Lage der Kratzer unmittelbar an dem Anzeigebereich des Moduls sogar größer ausfallen als Kratzer an der äußeren Seite des Schutzfensters, was etwa bei einer konvex gekrümmten Anzeigefläche oder bei einer Vergrößerung des Anzeigebildes über Linsen oder Linsenfolien besonders problematisch ist. Hinzu kommt, dass diese Kratzer bei den Geräten bereits von Anfang an vorliegen und den Verkauf dieser Geräte allein aufgrund des minderwertigen optischen Eindrucks beeinträchtigen, weshalb derartig beschädigte Geräte im Herstellerbetrieb bei der Endkontrolle üblicherweise lokalisiert und als Ausschuss behandelt werden. Weist die Polymerfolie sogar größere Kratzer auf, kann durch diese die Funktionalität der Polymerfolie derart beeinträchtigt sein, dass es bereits bei geringer externer Einwirkung zu einem Zersplittern des Verbund-Schutzfensters insgesamt kommen kann.

Es existieren bereits eine Vielzahl unterschiedlicher Ansätze zum Vermeiden der Gefahr eines Verkratzens der Schutzfenster während der Fertigung. Diese liefern jedoch nicht die gewünschten Ergebnisse, da die Maßnahmen entweder eine drastische Erhöhung der Herstellungskosten oder eine deutliche Verringerung der Transmission der Schutzfenster zur Folge hatten. Insbesondere letzteres ist nicht akzeptabel, wenn Schutzfenster für kontrastarme Anzeigesysteme verwendet werden, etwa für nicht selbstleuchtende Flüssigkristallanzeigen, die ausschließlich reflektiv und somit ohne Hintergrundbeleuchtung (Backlight) betrieben werden.

Eine Aufgabe der vorliegenden Erfindung ist es daher, ein ausschließlich einseitig verklebbares Flächenelement zur Verfügung zu stellen, das diese Nachteile beseitigt, das insbesondere als kostengünstige, transparente und allenfalls schwer beschädigbare Polymerfolie bei der Herstellung von transparenten Verbund-Schutzfenstern variabler Form zum Einsatz kommen kann und dadurch eine einfache Herstellung von Anzeigesystemen mit transparentem Sichtweg ermöglicht.

Diese Aufgabe konnte überraschend gelöst werden durch ein Gerät der eingangs genannten Art, bei dem das Flächenelement ein temporäres Abdeckungsmittel mit einem Trägerabschnitt und einem Haftabschnitt aufweist, wobei der Trägerabschnitt eine Biegesteifigkeit von höchstens 0,01 mNm aufweist, bevorzugt von höchstens 0,005 mNm und besonders bevorzugt von höchstens 0,004 mNm, und wobei das temporäre Abdeckungsmittel mittels des Haftabschnitts mit dem Träger an der zweiten Seitenfläche des Trägers derart rückstandsfrei ablösbar direkt verbunden ist, dass das temporäre Abdeckungsmittel eine die zweite Seitenfläche des Trägers beschädigungsfrei haltende Abdeckung bildet. Aufgrund des temporären Abdeckungsmittels wird eine Beschädigung des Trägers während der Verarbeitung und Lagerung ebenso effektiv wie effizient vermieden, wenn das temporäre Abdeckungsmittel erst unmittelbar vor der abschließenden Endmontage der einzelnen Komponenten entfernt wird.

Zur Erfindung trägt dabei in besonderem Maße die geringe Biegesteifigkeit des Trägerabschnitts des temporären Abdeckungsmittels bei, die zusätzlich zu der zum Gewährleisten der Funktionalität des temporären Abdeckungsmittels erforderlichen Klebkraft spezifiziert ist. Bei Trägermaterialien herkömmlicher Art ist eine Biegesteifigkeit aus einem Bereich von 0,3 mNm bis 1,0 mNm üblich. Wie Experimente der Erfinder gezeigt haben, sind derartige Systeme jedoch nicht zum Schutz von optischen Anzeigesystemen geeignet, da nach Entfernen eines derartigen temporären Abdeckungsmittels stets Trübungen an dem Verbund aus Flächenelement und Schutzfenster auftreten, die vor dem Entfernen nicht beobachtet wurden. Diese Eintrübung wird auf Oberflächendeformationseffekte zurückgeführt, die beim Abziehen des temporären Abdeckungsmittels auf der freigelegten Seite des Trägers auftreten können. Ferner kann es infolge ungleichmäßiger lokaler Belastung des Klebeverbunds beim Entfernen des temporären Abdeckungsmittels auch temporär zu einem punktuellen Lösen der Verbindung zwischen Flächenelement und Haftgrund kommen, was in den abgelösten Bereichen auch nach erneutem Andrücken eine erhöhte Streuung des Lichts und somit eine Verringerung der Transmission zur Folge haben kann.

Bei Einsatz des erfindungsgemäßen Flächenelements wird eine derartige Verringerung der optischen Transmission infolge des Abziehens des temporären Abdeckungsmittels aufgrund der besonderen Ausbildung des temporären Abdeckungsmittels auf einfache und kostengünstige Weise wirksam vermieden, so dass temporäre Abdeckungsmittel nunmehr auch zum Schutz von optisch transparenten Verklebungen eingesetzt werden können.

Günstig ist es dabei zudem, wenn das Flächenelement vollflächig für sichtbares Licht hochtransparent ausgebildet ist, wobei es für Licht einer Wellenlänge von 550 nm eine Transmission von mehr als 80 % aufweist, insbesondere von mehr als 85 %. Infolge einer solchen hochtransparenten Ausbildung wird die Verwendung des erfindungsgemäßen Flächenelements insbesondere auch für kontrastarme Anzeigesysteme möglich.

Ferner ist es von Vorteil, wenn zumindest eine Seitenfläche des Trägerabschnitts des temporären Abdeckungsmittels stabil gegenüber mechanischer Beanspruchung ausgebildet ist. Dies beinhaltet zum Beispiel eine hohe Festigkeit wie etwa Reißfestigkeit, eine hohe Risszähigkeit, eine geringe Ritzbarkeit, eine geringe Spaltbarkeit oder

dergleichen. Infolge der Ausbildung der nach außen gerichteten Seitenfläche des Trägerabschnitts wird die Schutzwirkung des temporären Abdeckungsmittels verbessert.

Ebenso ist es günstig, wenn zumindest eine Seitenfläche des Trägerabschnitts des temporären Abdeckungsmittels beständig gegenüber Chemikalien ausgebildet ist. Eine derartige Beständigkeit schließt beispielsweise die Beständigkeit gegenüber korrosiven Gasen oder Flüssigkeiten wie etwa Nichtmetalloxiden, anorganischen und organischen Säuren und Basen oder dergleichen, gegenüber Lösemitteln wie etwa Wasser, Kohlenwasserstoffen, Alkoholen, Ethern, Estern, Ketonen oder dergleichen, sowie gegenüber Feststoffen wie etwa Flugrost, korrosiven Stäuben oder dergleichen ein. Aufgrund einer derartigen Ausbildung der nach außen gerichteten Seitenfläche wird die Schutzwirkung des temporären Abdeckungsmittels weiterhin verbessert.

Außerdem kann der Trägerabschnitt mit dem Haftabschnitt des temporären Abdeckungsmittels identisch sein, so dass der Haftabschnitt des temporären Abdeckungsmittels direkt und klebemassenlos mit dem Träger rückstandsfrei ablösbar verbunden ist. Die Verwendung eines derart anfassklebrigen (tackigen) Trägerabschnitts als temporäres Abdeckungsmittel bietet den Vorteil, temporäre Abdeckungsmittel verwenden zu können, die kostengünstig ohne weitere Beschichtungsschritte herstellbar sind und darüber hinaus ohne eine zusätzliche Anpassung rückstandsfrei ablösbar sind, wodurch ein Verklebungsverbund mit hoher Transparenz realisierbar ist. Alternativ kann der Haftabschnitt des temporären Abdeckungsmittels aber auch eine separate Abdeckungsmittelklebemasse umfassen, die das temporäre Abdeckungsmittel mit dem Träger rückstandsfrei ablösbar verbindet. Infolge einer solchen Ausbildung lassen sich besonders stabile temporäre Abdeckungen realisieren, die sich auf die jeweiligen konkreten Verhältnisse gut anpassen lassen und so auch bei starken Scherbelastungen einen vollflächigen Schutz des abgedeckten Trägers in der Sichtfläche gewährleisten können. Als Sichtfläche wird dabei die Teilfläche des Flächenelements aufgefasst, durch die im Anzeigesystem der zur Anzeige von Informationen angepasste Bereich der Anzeigeeinrichtung betracht wird; diese Teilfläche kann dabei maximal die gesamte Fläche der Hauptausdehnung des Flächenelements umfassen.

Das temporäre Abdeckungsmittel kann weiterhin an der zweiten Seitenfläche des Trägers eine Klebkraft von weniger als 1,0 N/cm aufweisen, bevorzugt von weniger als 0,5 N/cm, besonders bevorzugt von weniger als 0,1 N/cm. Hierdurch wird das rückstandsfreie Ablösen des temporären Abdeckungsmittels von dem Träger außerordentlich vereinfacht. Zudem kann die Klebeschichtung für eine Klebkraft auf dem spröden Flächenkörper von mehr als 3,5 N/cm angepasst sein, bevorzugt von mehr als 4,0 N/cm. Auf diese Weise lässt sich für einen spröden Flächenkörper ein besonders effizienter Splitterschutz verwirklichen. Besonders vorteilhaft ist dabei eine Kombination der beiden vorgenannten Merkmalen, wodurch ein besonders schonendes Ablösen des temporären Abdeckungsmittels vom Träger ermöglicht wird, so dass sich das auf dem spröden Flächenkörper verklebte Flächenelement beim Entfernen des temporären Abdeckungsmittels nicht lokal abhebt und somit ein besonders transparenter Klebeverbund gewährleistet ist.

Vorteilhaft ist es, wenn die Klebeschichtung eine Haftklebemasse umfasst. Hierdurch wird ein einfaches Verkleben des Flächenelements auf dem spröden Flächenkörper möglich. Soll hingegen eine außerordentlich feste Verklebung erreicht werden - wie dies etwa bei Anzeigesystemen erforderlich sein kann, die eines hocheffizienten Splitterschutzes bedürfen, etwa zu Sicherung von Quarzglasscheiben - so kann die Klebeschichtung statt einer Haftklebemasse auch eine Hitze-aktivierbare Klebemasse umfassen.

In einer vorteilhaften Ausgestaltungsform weist die Klebeschichtung eine Klebemasse mit einem Brechungsindex $n_d$(20 °C) von mehr als 1,43 auf, wobei dieser bevorzugt sogar mehr als 1,47 beträgt. Mit dieser Ausgestaltung ist es möglich, einen besonders transparenten Klebeverbund zu erhalten, da durch die spezifische Anpassung des Brechungsindex an die in Richtung der Blickachse der Anzeige benachbarten Medien ermöglicht wird, für das den in den Klebeverbund eingestrahlte Licht den Anteil an reflektiertem Licht zu verringern und dadurch die Transmission des Verbundes insgesamt zu erhöhen.

Schließlich ist es günstig, wenn das Flächenelement einen von dem temporären Abdeckungsmittel verschiedenen temporären Träger umfasst, der an der Klebeschichtung angeordnet und mit der Klebeschichtung rückstandsfrei ablösbar verbunden ist. Diese Ausbildung ermöglicht eine besonders einfache Handhabung des erfindungsgemäßen Flächenelements vor dem Verkleben auf einem Durchsichtelement. Insbesondere durch diese Ausbildung ist es möglich, staub- und blasenfreie Verklebungen zu erhalten und somit auch einen Klebeverbund mit hervorragender Transparenz.

Gemäß einem weiteren Aspekt der vorliegenden Erfindung wird die Verwendung eines der zuvor genannten Flächenelemente als Splittersicherungseinrichtung für einen spröden Flächenkörper, die bei Bruch des Flächenkörpers den Flächenkörper zumindest im wesentlichen zusammen hält und so einer Vereinzelung von Bruchstücken des Flächenkörpers entgegenwirkt, sowie ein aus einem der vorgenannten Flächenelemente und einem Durchsichtelement erhaltener Klebeverbund vorgeschlagen, in dem das Durchsichtelement mit dem Flächenelement über die Klebeschichtung des Flächenelements dauerhaft verbunden ist.

Wie vorstehend beschreiben weisen die bisherigen Verfahren in der Praxis den Nachteil auf, dass es vor dem Zusammensetzen und Verbinden der einzelnen Komponenten eines Anzeigesystems zu einer Beschädigung der Oberfläche des Trägers des Flächenelements kommen kann, was die Transparenz des Klebeverbundes insgesamt beeinträchtigt. Eine weitere Aufgabe der Erfindung ist es daher, einen Klebeverbund zur Verfügung zu stellen, der die genannten Nachteile beseitigt und insbesondere hinreichend transparent ist. Dies wird durch Verwendung des erfindungsgemäßen Flächenelements erreicht.

Besonders günstig ist dabei, wenn das Durchsichtelement zumindest einen Teilbereich aus Glas aufweist, der als spröder Flächenkörper für das Verbinden mit dem Flächenelement angepasst ist. Aufgrund der hohen optischen Güte und Transparenz dieses Werkstoffes sowie der hohen Kratzfestigkeit wird bei der Verwendung von Glas ein besonders stabiler und zugleich transparenter Klebeverbund erhalten.

Ferner bietet die Erfindung gemäß einem weiteren Aspekt die Verwendung dieses Klebeverbunds als Beschädigungsschutzvorrichtung für eine Anzeigeeinrichtung. Die Beschädigungsschutzvorrichtung wirkt einer Beschädigung der Anzeigeeinrichtung bei äußerer mechanischer Einwirkung entgegen. Dadurch wird ein Anzeigesystem mit diesem Klebeverbund und einer Anzeigeeinrichtung zur Verfügung gestellt, in dem der Klebeverbund derart angeordnet ist, dass die Seite des Klebeverbunds, an der das Flächenelement angeordnet ist, zu der Seite der Anzeigeeinrichtung hin gewandt ist, die zur Anzeige der anzuzeigenden Informationen angepasst ist. Infolge dieser Anordnung wird ein im optischen Anzeigebereich an seiner Außenseite kratzfestes Anzeigesystem erhalten.

Günstig ist es dabei, wenn das Flächenelement und die zur Anzeige von Informationen angepasste Seite der Anzeigeeinrichtung derart zueinander beabstandet angeordnet sind, dass der mittlere Abstand mindestens 30 $\mu$m und höchstens 600 $\mu$m beträgt. Hierdurch wird eine wirksame mechanische Entkopplung der Oberflächen beider Komponenten erhalten, so dass der Verbund mit dem Flächenelement auch bei einer Deformation - etwa infolge eines auf das Durchsichtelement ausgeübten mechanischen Drucks - nicht mit der Anzeigeeinrichtung in Kontakt tritt und so eine Beschädigung der Anzeigeeinrichtung auch bei starker äußerer Einwirkung vermieden werden kann.

Schließlich bietet die Erfindung ein Verfahren zum Herstellen eines Anzeigesystems mit dem erfinderischen Flächenelement. Die bisher angewandten Verfahren sind darin nachteilig, dass es mit diesen nicht möglich ist, Beschädigungen an der Trägerseite des Flächenelements zu vermeiden, die im Verlauf des Fertigungsprozesses auftreten können. Eine weitere Aufgabe der Erfindung ist es daher, ein Verfahren zur Verfügung zu stellen, das die genannten Nachteile beseitigt und insbesondere eine beschädigungsfreie Herstellung des Anzeigesystems ermöglicht.

Diese Aufgabe wird durch die Verwendung des erfinderischen Flächenelements gelöst, bei dem die Klebeschichtung des Flächenelements zuerst dauerhaft über eine blasenfreie Verklebung mit dem spröden Flächenkörper unter in wesentlichen staubfreien Bedingungen zu dem oben beschriebenen Klebeverbund verbunden wird, nach einem Lagern des Klebeverbundes das temporäre Abdeckungsmittel entfernt wird und anschließend der Klebeverbund mit der Anzeigeeinrichtung in eine feste Anordnung gebracht wird.

Als Flächenelemente werden erfindungsgemäß alle üblichen flächenförmigen Gebilde angesehen, die eine Verklebung ermöglichen. Diese können verschieden ausgestaltet sein, insbesondere flexibel, beispielsweise als Band, Etikett oder Folie. Infolge der flächenförmigen Ausgestaltung erstrecken sich Flächenelemente somit entlang ihrer Länge und Breite (Hauptausdehnung) jeweils über einen Bereich, der größer als die Ausdehnung des Flächenelements in einer Richtung senkrecht zu diesen zwei Richtungen ist (Höhe; Nebenausdehnung), wobei die Flächenausdehnung in einer Ebene oder - etwa auf einem gekrümmten Substrat - auch in einer unebenen Anordnung liegen kann. Bei verklebbaren Flächenelementen handelt es sich um Flächenelemente, die verklebt werden und dann eine mechanisch belastbare Verbindung mit dem Klebegrund (Haftgrund; Untergrund; Substrat) bieten. Zu diesem Zweck sind die verklebbaren Flächenelemente einseitig mit Klebemassen ausgerüstet, die ebenfalls flächenförmig in Form einer Klebeschichtung angeordnet ist.

Derartige Flächenelemente sind vorliegend vollflächig für sichtbares Licht transparent und können sogar hochtransparent ausgebildet sein, so dass sie eine Transmission von mehr als 80 % für Licht einer Wellenlänge von 550 nm aufweisen, insbesondere von mehr als 85 %. Eine derartige Transparenz wird durch die Auswahl geeigneter Materialien als Komponenten des Flächenelements erzielt, wobei eine diesbezügliche Auswahl etwa hinsichtlich einer geringen Absorption der Materialien im gewünschten Wellenlängenbereich sowie dem jeweiligen Brechungsindex zu treffen ist. Beispiele für derartige Systeme sind im Folgenden beschrieben.

So weist das Flächenelement einen Träger auf. Dieser Träger ist flächenförmig mit einer zweidimensionalen Hauptausdehnung ausgebildet. Parallel zu seiner Hauptausdehnung begrenzen den Träger zwei Seitenflächen, eine erste Seitenfläche und eine zweite Seitenfläche.

Der Träger kann aus allen geeigneten flächenförmig ausgebreiteten Materialien hergestellt werden, sofern diese im Wellenlängenbereich des sichtbaren Lichtes eine hohe Transmission aufweisen. So ist es von Vorteil, wenn die Transmission für Licht einer Wellenlänge von 550 nm mehr als 86 % beträgt, besonders bevorzugt sogar mehr als 88 %. Zudem ist es günstig, wenn die Trübung weniger als 1 % beträgt (bestimmt als Haze-Wert nach ASTM D 1003).

Der Träger sollte einen Brechungsindex $n_d$ von mehr als 1,52 aufweisen. Als Brechungsindex $n_d$ wird im Rahmen dieser Arbeit die nach dem Brechungsgesetz von Snellius definierte Größe (Brechzahl) verstanden. Der Wert des Brechungsindex hängt von der Wellenlänge des eingestrahlten Lichts und von der Messtemperatur ab. Sofern nicht anders angegeben, wird vorliegend der Brechungsindex $n_d$ als derjenige Wert interpretiert, der bei einer Messtemperatur von 20 °C mit Licht einer Wellenlänge von 550 nm ($\pm$150 nm) gemessen wird.

Die Bedeutung des Brechungsindex bei der die Auslegung und Gestaltung optischer Bauteile wie etwa Glasfenster ergibt sich aus der Wechselwirkung der verwendeten Materialien mit dem eingestrahlten Licht. Für Licht einer

bestimmten Wellenlänge λ lässt sich aus dem Energieerhaltungssatz ableiten, dass in Abwesenheit von lichtgenerierenden Prozessen die Intensität des durch einen Körper hindurchtretenden Lichts der Intensität des eingestrahlten Lichts entspricht, abzüglich der Intensität des vom Körper absorbierten Lichts und der Intensität des an den Grenzflächen des Körpers reflektierten Lichts. Je nach konkreter Anwendung eines optischen Bauteils soll die Absorption, die Reflexion oder die Transmission dieses Bauteils optimiert werden, indem das Auftreten der jeweils anderen Effekte verringert wird. Optische Bauteile, die für die Transmission ausgelegt sind, weisen etwa eine hohe Transmission auf, die um ein Weniges kleiner ist als 1 (entsprechend einer Transmission von 100 % des eingestrahlten Lichts), wofür die Anteile von Absorption und Reflexion vermindert werden.

Wie Messungen mit einem UV-Vis Spektralphotometer zeigen, weisen Polymere auf Acrylatcopolymer- und Acrylatblockcopolymerbasis beispielsweise im Regelfall eine nur geringe Absorption im sichtbaren Bereich des Lichts auf (im Wellenlängenbereich zwischen 400 nm und 700 nm). Bei der Optimierung derartiger Systeme ist daher in erster Linie dem Anteil der Reflexion Rechnung zu tragen.

Reflexion tritt an der Grenzfläche zwischen zwei miteinander in Kontakt stehenden Phasen 1 und 2 auf. Die Größe der jeweiligen Reflexion p(λ) bestimmt sich dabei nach der Fresnel-Gleichung zu

$$\rho(\lambda) = \left( \frac{n_{d,2} - n_{d,1}}{n_{d,2} + n_{d,1}} \right)^2 \quad .$$

Für den Fall von Materialien mit gleichem Brechungsindex (isorefraktive Materialien, also für $n_{d,1} = n_{d,2}$) nimmt der Zähler in obiger Gleichung einen Wert von Null an. Somit kommt es also zu keiner Reflexion an dieser Grenzfläche. Zur Veränderung des Reflexionsverhaltens ist daher bei optischen Bauteilen eine Abstimmung der Brechungsindices der jeweiligen Komponenten sinnvoll. Typische Werte für Brechungsindices von häufig eingesetzten Materialien liegen im Bereich von 1,45 und 1,65 (zum Beispiel Quarzglas ($n_d$: 1,458), Bor-Kronglas ($n_d$: 1,518), Bor-Kronglas BK7 ($n_d$: 1,514), Flintglas ($n_d$: 1,620); Werte jeweils für Licht einer Wellenlänge von 588 nm; nach Pedrotti, Pedrotti, Bausch, Schmidt, Optik, 1996, Prentice Hall, München).

Abgesehen von der Auswahl des Trägermaterials entsprechend seiner optischen Eigenschaften sollte der Träger eine hinreichende Festigkeit aufweisen, um einen Schutz gegenüber splitterartigen Bruchstücken des Haftgrundes gewährleisten zu können. Hierfür ist es vorteilhaft, wenn der Träger einer Zugbeanspruchung von mehr als 50 MPa standhält (bestimmt nach ASTM D882), bevorzugt sogar 150 MPa, was beispielsweise durch Verwendung von Polyethylenterephthalat als Träger erhalten werden kann. So lassen sich etwa hochtransparente Folien einsetzen, die gleichzeitig einen Brechungsindex $n_d$ von mehr als 1,52, einen Haze-Wert von weniger als 3 % nach ASTM D1003 (oder - noch vorteilhafter - von weniger als 2 %) und eine Transmission von mehr als 86 % für Licht einer Wellenlänge von 550 nm nach ASTM D1003 aufweisen.

Geeignet sind daher als Trägermaterial beispielsweise hochtransparente Folien aus Polyestern wie etwa Polyethylenterephthalat (PET). So haben sich hierfür zum Beispiel einige der Folien als günstig herausgestellt, die unter der Bezeichnung Hostaphan™ von der Firma Mitsubishi oder unter der Bezeichnung Lumirror™ von der Firma Toray vertrieben werden, wobei insbesondere die hochtransparenten Formen Lumirror™ T60 für eine erfindungsgemäße Anwendung geeignet sind. Ein weiterer geeigneter Polyester ist beispielsweise Polybutylenterephthalat.

Neben Polyesterfolien lassen sich auch andere hochtransparente Folien einsetzen, etwa solche auf der Basis von Polyvinylchlorid (PVC), Polycarbonat (PC), Polyvinylalkohol, Polyvinylbutyral, Polyamid einschließlich Copolyamid, Polyimid, Polyurethan (PU), Polymethylmethacrylat (PMMA) oder Polystyrol (PS) sowie hiervon abgeleitete Materialien. Erfindungsgemäß können beispielsweise außer Folien aus reinem Polystyrol auch Folienmaterialien verwendet werden, die neben Styrol andere Comonomere enthalten, beispielsweise Butadien, um die Kristallisationsneigung der Folie zu verringern und damit die Transmission zu erhöhen.

Besonders geeignet als Träger eines erfindungsgemäßen Flächenelements ist Triacetylcellulose (TAC) sowie weitere Cellulosederivate, zum Beispiel Cellulosebutyrat, Cellulosepropionat und Ethylcellulose, die jeweils als Homopolymere oder als Comonomere sowie ebenfalls in Mischungen eingesetzt werden können.

Ebenfalls hervorragend als Träger geeignet sind hochtransparente Polyolefine, beispielsweise Polypropylen (PP), wobei es besonders günstig ist, wenn derartige Folien keine kristallinen Bereiche aufweisen, die die Transparenz verringern können. Dazu kann der Träger etwa nicht orientiert (als "gecastetes" Polypropylen) oder als orientiertes Material vorliegen, beispielsweise monoorientiert (MOPP) oder biaxial gereckt (BOPP). Ein anderes als Träger geeignetes Polyolefin ist zum Beispiel funktionalisiertes Polyethylen (PE). So lassen sich neben Ethylen auch Cyclohexen oder Norbonenderivate als Comonomere einsetzen, die eine Kristallisation verringern, oder auch andere olefinische Comonomere, die zusätzlich zum Ethylen eingesetzt werden und durch ihre sterische Anordnung das Auftreten von kristallinen Domänen verringern.

Weitere geeignete Materiale sind solche aus den Gruppen der Polyethersulfone und Polysulfone; diese werden beispielsweise von der Firma BASF unter den Bezeichnungen Ultrason™ E und Ultrason™ S vertrieben.

Überdies können auch hochtransparente thermoplastische Elastomere auf Urethanbasis (TPU) zum Einsatz kommen, wie sie etwa von der Firma Elastogran GmbH kommerziell erhältlich sind.

Um die Eigenschaften dieser Folien gezielt anpassen zu können, können diese natürlich auch weitere Bestandteile enthalten, beispielsweise Weichmacher zur Flexibilitätssteigerung. Des Weiteren kann die Oberfläche des Trägers behandelt sein, indem auf diese etwa eine dünne Beschichtung aufgedampft ist, beispielsweise Zinkoxid, oder ein Lack und/oder Haftvermittler aufgetragen ist.

Neben einschichtigen Folien lassen sich auch mehrschichtige Folien einsetzen, die etwa über eine Coextrusion hergestellt werden können. Hierfür ist es möglich, die vorgenannten Polymermaterialien miteinander zu kombinieren.

Um einerseits eine hinreichende mechanische Stabilität als Splitterschutz zu bieten, andererseits aber auch eine hohe Transmission sowie leichte Verarbeitbarkeit sicherzustellen, werden als Träger eines erfindungsgemäßen Flächenelements normalerweise Folienmaterialien mit einer Stärke aus einem Bereich zwischen 4 und 150 μm eingesetzt, bevorzugt aus einem Bereich von 12 bis 100 μm oder sogar aus einem Bereich von 23 bis 75 μm.

Weiterhin kann es vorteilhaft sein, wenn der Träger formstabil schneidbar oder stanzbar ist und zudem eine hinreichende thermische Beständigkeit aufweist, um auch einer Verarbeitung bei höheren Temperaturen standzuhalten, etwa beim Auftragen oder Aktivieren einer Hitzeaktivierbaren Klebemasse.

An der ersten Seitenfläche des Trägers ist eine Klebeschichtung angeordnet. Als Klebeschichtung wird eine zumindest im wesentlichen flächenförmig ausgebreitete Klebemasse bezeichnet, die somit ebenfalls über eine Hauptausdehnung und eine Nebenausdehnung verfügt. Die Klebemasse ist zu einem dauerhaften Verbinden des Flächenelements mit einem spröden Flächenkörper angepasst, der bei Bruch mittels des Flächenelements zusammenzuhalten ist. Als Flächenkörper wird vorliegend jeder einen Haftgrund für das Flächenelement bildende Körper verstanden, der zumindest einen flächigen Teilbereich aufweist, dessen Ausdehnung in etwa der Hauptausdehnung des Flächenelements entspricht, unabhängig von der konkreten Beschaffenheit dieses Körpers hinsichtlich seiner weiteren Abmessungen. Dieser Flächenkörper ist zudem spröde, er weist also eine hohe Sprödigkeit und somit auch Härte auf, so dass er sich unter Einwirkung einer äußeren Kraft kaum plastisch verformen lässt, sondern vielmehr bricht. Typische Beispiele für derartige spröde Flächenkörper sind etwa Gläser auf silikatischer Basis, die unterschiedliche Zusammensetzungen haben können, etwa Quarzglas, Boratglas, Laborglas, Fensterglas, Floatglas, Bleikristallglas, Kronglas, Kalk-Natron-Glas und dergleichen. Sollte es zu einem Bruch des spröden Flächenkörpers kommen, so dient das einseitig an der Oberseite des Flächenkörpers verklebte Flächenelement als Splitterschutz, indem es die Bruchstücke des Flächenkörpers einschließlich etwaiger Splitter infolge der Klebekraft der Klebemasse zusammen hält.

Erfindungsgemäß ist die Klebeschichtung für eine Klebkraft auf dem spröden Flächenkörper von mehr als 3,5 N/cm angepasst ist, bevorzugt von mehr als 4,0 N/cm. Eine derartige Anpassung wird etwa durch eine gezielte Abstimmung der Klebemasse der Klebeschichtung auf den jeweiligen Haftgrund erhalten, wobei eine derartige Abstimmung neben der Auswahl einer oder mehrerer Polymere als Klebemassen zum Beispiel auch eine gezielte Additivierung der Klebemasse umfassen kann.

Für erfindungsgemäß einsetzbare Klebemassen ist zusätzlich zu einer Anpassung der Klebkraft ist auch der Brechungsindex der Klebemasse von Bedeutung. So soll die Klebemasse bevorzugt einen Brechungsindex $n_d$(20 °C) von mehr als 1,43 aufweisen, vorzugsweise sogar von mehr als 1,47. Hierdurch ist es möglich ein besonders transparentes System zu erhalten. Maßnahmen zu einer derartigen Anpassung können alle geeigneten speziellen Maßnahmen darstellen, etwa die Wahl eines Polymorsystems mit einem geeigneten Brechungsindex als Klebemasse oder die Zugabe eines geeigneten Additivs zur Klebemasse. Beispiele für geeignete Polymersysteme finden sich nachstehend.

Grundsätzlich ist es demnach möglich, beliebige Klebemassen einzusetzen, sofern diese die zur Erzielung der erfinderischen Wirkung erforderlichen Eigenschaften aufweisen, etwa hinsichtlich ihres Absorptionsverhaltens und Brechungsindex sowie hinsichtlich der Klebkraft auf dem jeweiligen Substrat. So sind beispielsweise sowohl Haftklebemassen als auch Hitze-aktivierbare Klebemasse grundsätzlich gut geeignet. Im folgenden sind rein exemplarisch einige typische Klebemassen-Systeme beschrieben, die sich im Zusammenhang mit der vorliegenden Erfindung als besonders vorteilhaft herausgestellt haben.

Aufgrund von praktischen Erwägungen ist insbesondere die Verwendung von Haftklebemassen von Vorteil. So sind geeignete Haftklebemassen auf der Grundlage von Silikonsystemen etwa in US 4,874,671 beschrieben, mit denen sich Klebemassen mit Brechungsindices von mehr als 1,47 realisieren lassen. Der Brechungsindex $n_d$ ist dabei nach dem Brechungsgesetz von Snellius definiert.

Bevorzugt gelangen jedoch auch Haftklebemassen auf Acrylatbasis zum Einsatz. Derartige Klebemassen sind aus acrylatartigen Monomeren aufgebaut. Die Gruppe der acrylatartigen Monomere besteht aus sämtlichen Verbindungen mit einer Struktur, die sich von der Struktur von unsubstituierter oder substituierter Acrylsäure oder Methacrylsäure oder aber aus Estern dieser Verbindungen herleiten lässt (diese Optionen werden mit dem Begriff "(Meth)Acrylate" zusammenfassend benannt). Diese Monomere lassen sich durch die allgemeine Formel $CH_2=C(R')(COOR'')$ beschreiben, wobei der Rest R' ein Wasserstoffatom oder eine Methylgruppe sein kann und der Rest R" ein Wasserstoffatom

sein kann oder aber aus der Gruppe der gesättigten, unverzweigten oder verzweigten, substituierten oder unsubstituierten $C_1$- bis $C_{30}$-Alkylgruppen gewählt ist. Zur Vermeidung optischer Beeinträchtigungen der Klebemasse aufgrund von Beimengungen in den Monomeren werden die Monomere bevorzugt vor der Verwendung aufgereinigt, etwa um Alterungsschutzmittel zu entfernen, die sich unter Lichteinfluss verfärben.

Die (Meth)Acrylat-basierenden Polymere dieser Haftklebemassen sind etwa durch radikalische Polymerisation erhältlich, wobei das Polymer häufig einen Gehalt an acrylatartigen Monomeren von 50 Gew.-% oder mehr aufweist.

Die Monomere werden dabei üblicherweise dermaßen gewählt, dass die resultierenden Polymormassen bei Raumtemperatur oder höheren Temperaturen als Haftklebemassen eingesetzt werden können, wobei diese haftklebende Eigenschaften entsprechend dem "Handbook of Pressure Sensitive Adhesive Technology" von Donatas Satas (van Nostrand, New York 1989) besitzen.

Im Hinblick auf die optischen Eigenschaften des Produktes ist es dabei von Vorteil, wenn die (Meth)Acrylathaftklebemassen Brechungsindices $n_d$ von mehr als > 1,43 aufweisen (bei 20 ˚C).

(Meth)Acrylathaftklebemassen lassen sich dabei bevorzugt durch Polymerisation einer Monomermischung gewinnen, die Acrylsäureester und/oder Methacrylsäureester und/oder deren freien Säuren mit der Formel $CH_2=C(R')(COOR''')$ umfasst, wobei R' = H oder $CH_3$ und R''' H oder eine Alkylkette mit 1 - 20 C-Atomen ist. Die Poly(meth)acrylate weisen hierbei üblicherweise Molekulargewichte (Molmassen) $M_w$ von mehr als 200.000 g/mol auf.

Als Monomere können etwa Acrylmomonere oder Methacrylmonomere eingesetzt werden, die Acryl- und Methacrylsäureester mit Alkylgruppen aus 4 bis 14 C-Atomen umfassen, üblicherweise aus 4 bis 9 C-Atomen. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat oder deren verzweigten Isomere wie etwa Isobutylacrylat, 2-Ethylhexylacrylat, 2-Ethylhexylmethacrylat, Isooctylacrylat oder Isooctylmethacrylat.

Weitere einsetzbare Monomere sind monofunktionelle Acrylate bzw. Methacrylate von überbrückten Cycloalkylalkoholen, bestehend aus zumindest 6 C-Atomen. Die Cycloalkylalkohole können auch substituiert sein, zum Beispiel durch $C_1$- bis $C_6$-Alkylgruppen, Halogenatome oder Cyanogruppen. Spezifische Beispiele sind Cyclohexylmethacrylat, Isobornylacrylat, Isobornylmethacrylat und 3,5-Dimethyladamantylacrylat.

Ferner können Monomere eingesetzt werden, die polare Gruppen aufweisen wie beispielsweise Carboxylreste, Sulfonsäure-, Phosphonsäure-, Hydroxy-, Lactam-, Lacton-, N-substituierte Amid-, N-substituierte Amin-, Carbamat-, Epoxy-, Thiol-, Alkoxy- oder Cyanreste sowie Ethergruppen oder dergleichen.

Als moderate basische Monomere geeignet sind beispielsweise einfach oder zweifach N-alkylsubstituierte Amide, insbesondere Acrylamide. Spezifische Beispiele sind N,N-Dimethylacrylamid, N,N-Dimethylmethacrylamid, N-tert-Butylacrylamid, N-Vinylpyrrolidon, N-Vinyllactam, Dimethylaminoethylacrylat, Dimethylaminoethylmethacrylat, Diethylaminoethylacrylat, Diethylaminoethylmethacrylat, N-Methylolacrylamid, N-Methylolmethacrylamid, N-(Butoxymethyl)methacrylamid, N-(Ethoxymethyl)acrylamid, N-Isopropylacrylamid, wobei diese Aufzählung nicht abschließend ist.

Weitere Beispiele für Monomere werden aufgrund ihrer für eine Vernetzung nutzbaren funktionellen Gruppen ausgewählt, etwa Hydroxyethylacrylat, Hydroxyethylmethacrylat, Hydroxypropylacrylat, Hydroxypropylmethacrylat, Allylalkohol, Maleinsäureanhydrid, Itaconsäureanhydrid, Itaconsäure, Glyceridylmethacrylat, Phenoxyethylacrylat, Phenoxyethylmethacrylat, 2-Butoxyethylacrylat, 2-Butoxyethylmethacrylat, Cyanoethylacrylat, Cyanoethylmethacrylat, Glycerylmethacrylat, 6-Hydroxyhexylmethacrylat, Vinylessigsäure, Tetrahydrofurfurylacrylat, $\beta$-Acryloyloxypropionsäure, Trichloracrylsäure, Fumarsäure, Crotonsäure, Aconitsäure, Dimethylacrylsäure, wobei diese Aufzählung nicht abschließend ist.

Ferner kommen als Monomere Vinylverbindungen in Frage, insbesondere Vinylester, Vinylether, Vinylhalogenide, Vinylidenhalogenide, Vinylverbindungen mit aromatischen Cyclen und Heterocyclen in $\alpha$-Stellung. Auch hier seien nicht ausschließend einige Beispiele genannt, wie Vinylacetat, Vinylformamid, Vinylpyridin, Ethylvinylether, Vinylchlorid, Vinylidenchlorid und Acrylnitril.

Im Hinblick auf die optischen Eigenschaften der Klebemasse ist es ganz besonders günstig, Copolymere einzusetzen, die Comonomere enthalten, die zumindest einen aromatischen Teilbereich aufweisen und dadurch den Brechungsindex der Klebemasse erhöhen können. Als derartige Komponenten eigenen sich aromatische Vinylverbindungen wie etwa Styrol, wobei die aromatischen Teilbereiche bevorzugt einen aromatischen Kern aus $C_4$- bis $C_{18}$-Bausteinen aufweisen und optional auch Heteroatome enthalten können. Beispiele hierfür sind etwa 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat, 4-Biphenylmethacrylat, 2-Naphthylacrylat, 2-Naphthylmethacrylat sowie Mischungen aus diesen Monomeren, wobei diese Aufzählung nicht abschließend ist.

Bei Haftklebemassen wird der Anteil an mit Aromaten substituierten Monomeren in der Klebemasse jedoch dadurch begrenzt, dass durch Verwendung derartiger Monomere die Glasübergangstemperatur des Polymers erhöht wird, was die Abnahme der Klebrigkeit dieses Polymers zur Folge hat. Da dies ein für Haftklebemassen unerwünschter Effekt ist, ist je nach dem gewählten System der Aromatenanteil infolge dieser Wechselwirkungen nicht frei wählbar.

Durch die Auswahl der Comonomere und des Anteils dieser Comonomere an der Klebemasse ist es also möglich, den Brechungsindex der Klebemasse gezielt zu steuern. So kann etwa bei Erhöhung des Anteils von mit aromatischen Systemen substituierten Comonomeren der Brechungsindex der Klebemasse insgesamt vergrößert werden und so eine Lichtstreuung an der Grenzfläche zwischen der Haftklebemasse und einem Glassubstrat verringert werden.

Die Comonomer-Zusammensetzung lassen sich dabei auch derart wählen, dass die Haftklebemassen als Hitze-aktivierbare Haftklebemassen einsetzbar sind, die erst unter Temperatureinwirkung und optionalem Druck haftklebrig werden und nach Verklebung und Abkühlen infolge der Verfestigung eine hohe Klebkraft zum Haftgrund aufbauen. Derartige Systeme weisen Glasübergangstemperaturen $T_G$ von 25 ˚C oder mehr auf.

Weitere Beispiele für Monomere können Photoinitiatoren mit einer copolymerisierbaren Doppelbindung sein, insbesondere solche, die aus der Gruppe enthaltend Norrish-I- oder Norrish-II-Photoinitiatoren, Benzoinacrylate oder acrylierte Benzophenone (unter der Bezeichnung Ebecryl P 36® von der Firma UCB im Handel) ausgewählt werden. Grundsätzlich sind hierbei alle dem Fachmann bekannten Photoinitiatoren einsetzbar, die bei Bestrahlung mit UV-Licht im Polymer über einen radikalischen Mechanismus eine Vernetzung bewirken. Einen allgemeinen Überblick über verwendbare Photoinitiatoren, die dann mit zumindest einer Doppelbindung funktionalisiert werden können, bietet Fouassier in "Photoinitiation, Photopolymerization and Photocuring: Fundamentals and Applications" (Hanser-Verlag, München 1995), sowie - ergänzend - Carroy et al. in "Chemistry and Technology of UV and EB Formulation for Coatings, Inks and Paints" (Oldring (Hrsg.), 1994, SITA, London).

Insbesondere können auch Haftklebemassen eingesetzt werden, die Acrylatblockcopolymere enthalten. Dadurch ist es möglich, zur Synthese einer Haftklebemasse mit hohem Brechungsindex eine große Anzahl unterschiedlicher Monomere verwenden zu können, so dass sich durch die konkrete Auswahl von Monomeren infolge der jeweiligen chemischen Zusammenstellung die Haftklebeeigenschaften gezielt in einem großen Umfang steuern und einstellen lassen. Zudem lassen sich so hochkohäsive Haftklebemassenschichten erhalten, ohne dass dafür zusätzliche Vernetzungsschritte erforderlich sind.

Das Acrylatblockcopolymer ist hierbei ein Acrylatblockcopolymer mit zumindest einer strukturellen Einheit, die durch die allgemeine stöchiometrische Formel P(A)-P(B)-P(A) beschrieben wird. A und B stehen hierbei für ein Monomer oder auch mehrere Monomere des Typs A bzw. für ein Monomer oder mehrere Monomere des Typs B, die zur Herstellung des jeweiligen Polymerblockes nutzbar sind. Im Sinne dieser Schrift soll der Begriff "Polymerblock" somit sowohl Homoals auch Copolymerblöcke einschließen, soweit im Einzelfall nicht etwas anderes spezifiziert wird. P(A) steht für einen Polymerblock, der durch Polymerisation wenigstens eines Monomers des Typs A erhalten wird. P(B) steht für einen Polymerblock, der durch Polymerisation wenigstens eines Monomers des Typs B erhalten wird. Demzufolge weist das Acrylatblockcopolymer mindestens die Einheit P(A)-P(B)-P(A) aus wenigstens einem Polymerblock P(B) und wenigstens zwei Polymorblöcken P(A) auf, wobei

- die Polymerblöcke P(A) voneinander unabhängige Homopolymerblöcke oder Copolymerblöcke sind, die jeweils zu mindestens 75 Gew.-% Monomere des Typs A enthalten, wobei die (Co-)Polymerblöcke P(A) jeweils Polymerblöcke mit Erweichungstemperaturen in einem Bereich von 0 ˚C bis +175 ˚C sind,

- der Polymerblock P(B) ein Homopolymerblock oder Copolymerblock ist, der Monomere des Typs B enthält, wobei der (Co-)Polymerblock P(B) ein Polymerblock mit einer Erweichungstemperatur in einem Bereich von 10 ˚C bis 130 ˚C aufweist,

- die Polymerblöcke P(A) und P(B) bei 25 ˚C unter Anwendungsbedingungen nicht vollständig (homogen) mischbar sind.

- die Haftklebemasse insgesamt einen Brechungsindex $n_d$ von mehr als 1,52 bei 20 ˚C aufweist,

- zumindest einer der (Co-)Polymerblöcke P(A) einen Brechungsindex $n_d$ von mehr als 1,58 bei 20 ˚C aufweist, und

- der (Co-)Polymerblock P(B) einen Brechungsindex $n_d$ von mehr als 1,43 bei 20 ˚C aufweist.

Unter Erweichungstemperatur wird vorliegend eine Glasübergangstemperatur für amorphe Systeme und eine Schmelztemperatur bei semikristallinen Polymeren verstanden. Die hier angegebenen Temperaturen entsprechen solchen, die aus quasistationären Experimenten wie zum Beispiel mit Hilfe der Differential Scanning Calorimetry (DSC) erhalten werden.

Bei einer derartigen Blockcopolymer-basierenden Klebemasse können günstigerweise alle (Co-)Polymerblökke P(A) jeweils einen Brechungsindex $n_d$ von mehr 1,58 bei 20˚C aufweisen. Zudem kann das zumindest ein Blockcopolymer in der Haftklebemasse auch zu einem Masseanteil von 50 Gew.-% oder mehr vorliegen.

Die Polymerblöcke P(B) aus obigem allgemeinen Blockcopolymer werden im folgenden als Elastomerblöcke bezeichnet, wohingegen die Polymerblöcke P(A) demgemäß Hartblöcken entsprechen.

Unter den Haftklebemassen auf Blockcopolymerbasis haben sich insbesondere solche Haftklebemassen als ausnehmend günstig herausgestellt, die einen Brechungsindex $n_d$ von mehr als 1,52 besitzen und bei denen der Aufbau des Blockcopolymers oder der Blockcopolymere durch eine oder mehrere der folgenden allgemeinen Formeln beschrieben werden kann:

$$P(A)\text{-}P(B)\text{-}P(A) \qquad (PI)$$

$$P(B)\text{-}P(A)\text{-}P(B)\text{-}P(A)\text{-}P(B) \qquad (PII)$$

$$[P(A)\text{-}P(B)]_nX \qquad (PIII)$$

$$[P(A)\text{-}P(B)]_nX[P(A)]_m \qquad (PIV).$$

Hierin stellen n und m positive ganze Zahlen dar, wobei gilt $3 \leq n \leq 12$ und $3 \leq m \leq 12$. X bezeichnet ein chemisches Bauelement, das als multifunktionelle Verzweigungseinheit dient, über die verschiedene Zweige des Polymers miteinander verknüpft sind. Ferner sind die Polymerblöcke P(A) voneinander unabhängige Homopolymerblöcke oder Copolymerblöcke, die jeweils zu mindestens 75 Gew.-% Monomere des Typs A enthalten, wobei die (Co-)Polymerblöcke P(A) jeweils Polymerblöcke mit Erweichungstemperaturen in einem Bereich von 0 ˚C bis +175 ˚C und mit einem Brechungsindex $n_d$ von mehr als 1,58 bei 20 ˚C sind. Dementsprechend sind der Polymerblock P(B) bzw. die Polymerblöcke P(B) Homopolymerblöcke oder Copolymerblöcke, die Monomere des Typs B enthalten, wobei (Co-) Polymerblöcke P(B) Polymerblöcke mit Erweichungstemperaturen in einem Bereich von 10 ˚C bis 130 ˚C und einem Brechungsindex $n_d$ von mehr als 1,43 bei 20 ˚C sind.

Bei den Polymorblöcken P(A) kann es sich um Polymerketten einer einzigen Monomersorte vom dem Typ A oder um Copolymere aus Monomeren verschiedener Strukturen vom Typ A handeln, gegebenenfalls um Copolymere, die zu mindestens 75 Gew.-% Monomere vom Typ A und zu maximal 25 Gew.-% Monomere vom Typ B umfassen. Insbesondere können die eingesetzten Monomere vom Typ A in ihrer chemischen Struktur und/oder in der Länge der Seitenketten variieren. Die Polymerblöcke umfassen somit die Spanne zwischen vollkommen homogenen Polymeren über Polymere aus Monomeren gleicher chemischer Grundstruktur aber unterschiedlicher Kettenlänge und solchen gleicher Anzahl an Kohlenstoffatomen aber unterschiedlicher Isomerie bis hin zu statistisch polymerisierten Blöcken aus unterschiedlich langen Monomeren unterschiedlicher Isomerie vom Typ A. Entsprechendes gilt für die Polymerblöcke P(B) bezüglich der Monomere vom Typ B.

Die Einheit P(A)-P(B)-P(A) kann dabei sowohl symmetrisch - etwa entsprechend $P^1(A)\text{-}P(B)\text{-}P^2(A)$ mit $P^1(A) = P^2(A)$] - als auch unsymmetrisch aufgebaut sein, etwa entsprechend der Formel $P^3(A)\text{-}P(B)\text{-}P^4(A)$ mit $P^3(A) \neq P^4(A)$, wobei aber sowohl $P^3(A)$ als auch $P^4(A)$ jeweils Polymerblöcke im Sinne der Definition für P(A) sind. $P^3(A)$ und $P^4(A)$ können sich insbesondere in ihrer chemischen Zusammensetzung und/oder ihrer Kettenlänge unterscheiden.

Die Blockcopolymere können dabei einen symmetrischen Aufbau aufweisen, so dass in der Kettenlänge und/oder der chemischen Struktur identische Polymerblöcke P(A) und/oder dass in der Kettenlänge und/oder der chemischen Struktur identische Polymerblöcke P(B) vorliegen.

Ausgangsmonomere des Typs A für die Polymerblöcke P(A) können beispielsweise derart ausgewählt werden, dass die resultierenden Polymerblöcke P(A) mit den Polymerblöcken P(B) nicht mischbar sind und dementsprechend eine Mikrophasenseparation eintritt. Der Begriff der "Mikrophasenseparation" bezieht sich hierbei auf die Ausbildung von separierten Mikrophasen, so dass die unterschiedlichen Polymerblöcke beispielsweise in unterschiedlichen elongierten mikrophasenseparierten Bereichen (Domänen) vorliegen - etwa in Form von prolaten, mithin uniaxial elongierten (zum Beispiel stäbchenförmigen), oblaten, mithin biaxial elongierten (zum Beispiel schichtförmigen) Strukturelementen - oder dreidimensional cokontinuierliche mikrophasenseparierte Bereiche oder eine kontinuierliche Matrix einer Art an

Polymerblöcken mit darin dispergierten Bereichen einer anderen Art an Polymorblöcken ausbilden können. Typischerweise sind in den erfindungsgemäß eingesetzten Systemen die Domänengrößen kleiner als 400 nm oder bevorzugt sogar kleiner als 200 nm.

Geeignete Monomere des Typs A enthalten eine C-C-Doppelbindung, insbesondere eine oder mehrere Vinylgruppen im eigentlichen Sinne und/oder vinylähnliche Gruppen. Als vinylähnliche Gruppen werden hier solche Gruppen bezeichnet, bei der die Wasserstoffatome der ungesättigten C-Atome teilweise oder vollständig durch organische und/ oder anorganische Reste substituiert sind. In diesem Sinne zählen auch Acrylsäure, Methacrylsäure und/oder deren Derivate zu den vinylähnliche Gruppen aufweisenden Verbindungen. Vorstehende Verbindungen werden im Weiteren zusammenfassend als Vinylverbindungen bezeichnet.

Vorteilhafte Beispiele für Verbindungen, die als Monomere des Typs A eingesetzt werden, sind Vinylaromaten, die als Polymerisate einen Brechungsindex von mehr als 1,58 besitzen (bei 25°C). Konkrete Monomere, die hier lediglich beispielhaft und damit nicht umfassend aufgeführt sind, sind etwa Styrol, α-Methylstyrol, o-Methylstyrol, o-Methoxystyrol, p-Methoxystyrol oder 4-Methoxy-2-methylstyrol.

Weiterhin lassen sich als Monomere des Typs A vorteilhaft Acrylate - wie zum Beispiel mit Acrylat terminiertes Polystyrol oder α-Bromphenylacrylat - und/oder Methacrylate wie beispielsweise mit Methacrylat terminiertes Polystyrol, das etwa als Methacromer PS 12 von der Firma Polymer Chemistry Innovations erhältlich ist, 1,2-Diphenylethylmethacrylat, Diphenylmethylmethacrylat, o-Chlorbenzylmethacrylat, p-Bromphenylmethacrylat und/oder Acrylamide einsetzen, beispielsweise N-Benzylmethacrylamid.

Dabei können auch mehrere Monomere miteinander gemischt eingesetzt werden. Da zur Erzielung eines Brechungsindex $n_d$ von mehr als 1,58 für die Polymerblöcke P(A) grundsätzlich auch Monomergemische eingesetzt werden können, kann auch eine oder mehrere Komponenten als Homopolymer einen Brechungsindex $n_d$ von weniger als 1,58 besitzen (bei 25 °C). Konkrete Beispiele für derartige Comonomere (ohne Anspruch auf Vollständigkeit) sind o-Cresylmethacrylat, Phenylmethacrylat, Benzylmethacrylat oder o-Methoxyphenylmethacrylat.

Weiterhin können die Polymerblöcke P(A) aber auch derart als Copolymere aufgebaut sein, dass sie zu mindestens 75 Gew.-% aus den vorstehenden Monomeren des Typs A oder aber aus einem Gemisch dieser Monomere bestehen, was zu einer hohen Erweichungstemperatur führt, zu maximal 25 Gew.-% auch Monomere des Typs B enthalten können, was zu einer Erniedrigung der Erweichungstemperatur des Polymerblocks P(A) führt. In diesem Sinne seien beispielhaft Alkylacrylate genannt, die untenstehend entsprechend der Struktur B1 und dem darunter angeführten definiert sind.

Monomere des Typs B für den Polymerblock P(B) werden vorteilhafterweise ebenfalls so gewählt, dass diese C-C-Doppelbindungen (besonders Vinylgruppen und vinylähnliche Gruppen) aufweisen, wobei hierfür vorteilhafterweise darauf zu achten ist, dass der Polymerblock P(B) einen Brechungsindex $n_d$ von mindestens 1,43 aufweist.

Als Monomere des Typs B werden günstigerweise Acrylatmonomere eingesetzt. Hierfür sind prinzipiell alle dem Fachmann geläufigen Acrylatverbindungen einsetzbar, die sich zur Synthese von Polymeren eignen. Bevorzugt werden solche Monomere gewählt, die Glasübergangstemperaturen des Polymerblocks P(B) auch in Kombination mit einem oder mehreren weiteren Monomeren von weniger als +10 °C bedingen. Entsprechend können auch bevorzugt Vinylmonomere gewählt werden.

Für die Präparation der Polymerblöcke P(B) werden vorteilhaft zu 75 bis 100 Gew.-% Acrylsäure und/oder Methacrylsäurederivate der allgemeinen Struktur

$$CH_2=C(R^{\circ})(COOR^{\circ\circ}) \qquad (B1)$$

eingesetzt, wobei $R^{\circ}$ = H oder $CH_3$ und $R^{\circ\circ}$ = H oder lineare, verzweigte oder ringförmige, gesättigte oder ungesättigte Kohlenwasserstoffketten mit 1 bis 30 Kohlenstoffatomen darstellt, insbesondere mit 4 bis 18 Kohlenstoffatomen, sowie maximal 25 Gew.-% an Monomeren B2 aus der Gruppe der Vinylverbindungen, wobei diese Monomere günstigenfalls weitere funktionelle Gruppen enthalten.

Die vorstehenden Gewichtsprozentangaben addieren sich bevorzugt zu 100 %, die Summe kann aber auch weniger als 100 Gew.-% betragen, sofern weitere (polymerisierbare) Monomere vorhanden sind.

Acrylmonomere des Typs B, die sehr bevorzugt im Sinne der Verbindung B1 als Komponenten für die Polymerblöcke P(B) eingesetzt werden, umfassen Acrylsäureester und Methacrylsäureester mit Alkyl-, Alkenyl- und/oder Alkinylgruppen, jeweils bestehend aus 4 bis 18 C-Atomen. Spezifische Beispiele für entsprechende Verbindungen sind - ohne sich durch diese Aufzählung einschränken zu wollen - n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere wie etwa 2-Ethylhexylacrylat und Isooctylacrylat, sowie cyclische Monomere wie zum Beispiel Cyclohexyl- oder Norbornylacrylat und Isobornylacrylat.

Weiterhin können optional als Monomere B2 für Polymerblöcke P(B) Vinylmonomere aus den folgenden Gruppen eingesetzt werden: Vinylester, Vinylether, Vinylhalogenide, Vinylidenhalogenide sowie Vinylverbindungen, die aromatische Cyclen und Heterocyclen in α-Stellung enthalten. Auch hier seien erfindungsgemäß einsetzbare Monomere

beispielhaft ausgewählt benannt: Vinylacetat, Vinylformamid, Vinylpyridin, Ethylvinylether, 2-Ethylhexylvinylether, Butylvinylether, Vinylchlorid, Vinylidenchlorid und Acrylnitril.

Als besonders bevorzugte Beispiele für vinylgruppenhaltige Monomere im Sinne von Monomer B2 für den Elastomerblock P(B) eignen sich weiterhin Hydroxyethylacrylat, Hydroxypropylacrylat, Hydroxyethylmethacrylat, Hydroxypropylmethacrylat, N-Methylolacrylamid, Acrylsäure, Methacrylsäure, Allylalkohol, Maleinsäureanhydrid, Itaconsäureanhydrid, Itaconsäure, Benzoinacrylat, acryliertes Benzophenon, Acrylamid und Glycidylmethacrylat, um nur einige zu nennen.

Sämtliche dieser einsetzbaren Monomere können ebenfalls in einer halogenierten Form verwendet werden.

Besonders bevorzugt weisen erfindungsgemäß eingesetzte Haftklebemassen mit einem Brechungsindex von mehr als 1,52 einen Polymerblock oder mehrere Polymerblöcke mit einer oder mehreren aufgepfropften Seitenketten auf. Dabei kann es sich um Verbindungen handeln, bei denen die Seitenketten durch einen so genannten "graft-from"-Prozess (Aufpolymerisation einer Seitenkette ausgehend von einem bestehenden Polymerrückgrat) oder durch einen so genannten "graft-to"-Prozess (Anbindung von Polymerketten an ein Polymerrückgrat über polymeranaloge Reaktionen) erhalten werden.

Als Makromonomere des Typs A und B können insbesondere zur Herstellung von Blockcopolymeren mit Seitenketten derartig funktionalisierte Monomere gewählt werden, die einen "graft-from"-Prozess zum Aufpfropfen von Seitenketten ermöglichen. Hier sind insbesondere Acrylat- und Methacrylatmonomere zu nennen, die als Funktionalisierung Halogene oder andere funktionellen Gruppen tragen, die beispielsweise einen ATRP-Prozess (Atom Transfer Radical Polymerization) erlauben. In diesem Zusammenhang sei auch die Möglichkeit genannt, über die Zugabe von Makromonomeren während der Polymerisation gezielt Seitenketten in die Polymerketten einzuführen.

In einer speziellen Ausführung dieser Erfindung sind eine oder mehrere funktionelle Gruppen in die Polymerblöcke P(B) eingebaut, die eine strahlenchemische Vernetzung der Polymerblöcke insbesondere mittels Bestrahlung mit ultraviolettem Licht (UV-Licht) oder mit schnellen Elektronen (Elektronenstrahlhärtung) erlauben. Als Monomereinheiten des Typs B können mit dieser Zielsetzung insbesondere Acrylester genutzt werden, die einen ungesättigten Kohlenwasserstoffrest mit 3 bis 18 Kohlenstoffatomen enthalten, der mindestens eine Kohlenstoff-Kohlenstoff-Doppelbindung enthält. Als derartige mit Doppelbindungen modifizierte Acrylate eignen sich besonders Allylacrylat und acrylierte Zimtsäureester. Neben Acrylmonomeren lassen sich als Monomere für den Polymerblock P(B) günstigerweise auch Vinylverbindungen mit während der (radikalischen) Polymerisation des Polymerblockes P(B) nicht reagierenden Doppelbindungen einsetzen. Besonders bevorzugte Beispiele für dementsprechende Comonomere sind Isopren und/oder Butadien, aber auch Chloropren.

In einer weiteren Ausführungsform der Haftklebemasse sind Polymerblöcke P(A) und/oder P(B) derart funktionalisiert, dass eine thermisch initiierte Vernetzung durchführbar ist. Als Vernetzer können unter anderem gewählt werden: Epoxide, Aziridine, Isocyanate, Polycarbodiimide und Metallchelate, um nur einige zu nennen.

Ein bevorzugtes Charakteristikum der Haftklebemassen ist, dass das zahlengemittelte mittlere Molekulargewicht $M_n$ zumindest eines der Blockcopolymere, bei mehreren Blockcopolymeren insbesondere aller Blockcopolymere zwischen 10.000 und 600.000 g/mol liegt, bevorzugt zwischen 30.000 und 400.000 g/mol und besonders bevorzugt zwischen 50.000 g/mol und 300.000 g/mol.

Der Anteil der Polymerblöcke P(A) liegt vorteilhaft in einem Bereich von 5 bis 40 Gew.-% des gesamten Blockcopolymers, bevorzugt zwischen 7,5 und 35 Gew.-% und besonders bevorzugt zwischen 10 und 30 Gew.-%. Die Polydispersität D des Blockcopolymers ist bevorzugt kleiner als 3, gegeben durch den Quotienten aus Massenmittel $M_w$ und Zahlenmittel $M_n$ der Molekulargewichtverteilung. Bei mehreren Blockcopolymeren in der erfindungsgemäßen Haftklebemasse gelten die vorstehenden Angaben für die Anteile und die Polydispersität D günstigerweise für zumindest eines der Blockcopolymere, bevorzugt jedoch für alle vorhandenen Blockcopolymere.

Ferner kann das Verhältnis $V_{A/B}$ [$V_{A/B} = \overline{\ell}_{P(A)} / \overline{\ell}_{P(B)}$] der mittleren Kettenlänge $\overline{\ell}_{P(A)}$ der Polymerblöcke P(A) zu den Kettenlängen $\overline{\ell}_{P(B)}$ der Polymerblöcke P(B) so gewählt werden, dass die Polymerblöcke P(A) als disperse Phase ("Domänen") in einer kontinuierlichen Matrix der Polymerblöcke P(B) vorliegen, insbesondere als kugelförmige oder verzerrt kugelförmige oder zylinderförmige Domänen. Dies kann insbesondere bei einem Gehalt an Polymorblöcken P (A) von weniger als etwa 25 Gew.-% der Fall sein. Die Ausbildung von hexagonal gepackten zylindrischen Domänen der Polymerblöcke P(A) ist ebenfalls möglich.

Bei weiteren erfindungsgemäß verwendbaren Haftklebemassen beinhaltet die Haftklebemasse eine Mischung (Blend) aus

- zumindest einem Diblockcopolymer mit zumindest einem Triblockcopolymer, oder
- zumindest einem Diblockcopolymer mit zumindest einem sternförmigen Blockcopolymer, oder
- zumindest einem Triblockcopolymer mit zumindest einem sternförmigen Blockcopolymer,

wobei bevorzugt zumindest eine der vorgenannten Komponenten, vorteilhafterweise alle Blockcopolymer-Komponenten des Blends Blockcopolymere im Sinne der Definition des Hauptanspruchs darstellen.

So haben sich etwa als derartige Blends die folgenden Mischungen als günstig herausgestellt, die Blends der die Abfolge P(A)-P(B)-P(A) enthaltenden obigen Blockcopolymere mit Diblockcopolymeren P(A)-P(B) umfassen, wobei zur Herstellung der entsprechenden Polymerblöcke P(A) und P(B) die gleichen Monomere wie oben beschrieben genutzt werden können. Außerdem können einer Haftklebemasse, die Blockcopolymere wie insbesondere Triblockcopolymer PI oder ein Blockcopolymer/Diblockcopolymer-Blend enthält, zur Verbesserung ihrer Eigenschaften Polymere P'(A) und/oder P'(B) zugesetzt werden.

Dementsprechend können erfindungsgemäß auch Haftklebemassen auf Basis eines Blends von zumindest einem Blockcopolymer, das bei 20 ˚C einen Brechungsindex $n_d$ von mehr als 1,52 aufweist, und einem Diblockcopolymer P(A)-P(B) verwendet werden,

- wobei die Polymerblöcke P(A) der Diblockcopolymere unabhängig voneinander Homo-oder Copolymerblöcke aus den Monomeren des Typs A repräsentieren und jeweils eine Erweichungstemperatur in einem Bereich von 0 ˚C bis +175 ˚C sowie einen Brechungsindex $n_d$ von mehr als 1,58 aufweisen, und

- wobei die Polymerblöcke P(B) der Diblockcopolymere unabhängig voneinander Homo-oder Copolymerblöcke aus den Monomeren des Typs B repräsentieren und jeweils eine Erweichungstemperatur in einem Bereich von 130 ˚C bis +10 ˚C sowie einen Brechungsindex $n_d$ von mehr als 1,43 aufweisen,

und/oder mit Polymeren P'(A) und/oder P'(B),

- wobei die Polymere P'(A) Homo- und/oder Copolymere aus Monomeren des Typs A repräsentieren und jeweils eine Erweichungstemperatur in einem Bereich von 0 ˚C bis +175 ˚C sowie einen Brechungsindex $n_d$ von mehr als 1,58 aufweisen,

- wobei die Polymere P'(B) Homo- und/oder Copolymere aus Monomeren des Typs B repräsentieren und jeweils eine Erweichungstemperatur in einem Bereich von 130 ˚C bis +10 ˚C sowie einen Brechungsindex $n_d$ von mehr als 1,43 aufweisen, und

- wobei die Polymere P'(A) und P'(B) bevorzugt mit den Polymorblöcken P(A) beziehungsweise P(B) der obigen Blockcopolymere mischbar sind.

Sofern sowohl Polymere P'(A) und Polymere P'(B) zugemischt sind, werden diese vorteilhaft derart gewählt, dass die Polymere P'(A) und P'(B) nicht homogen miteinander mischbar sind.

Als Monomere für die Diblockcopolymere P(A)-P(B), für die Polymere P'(A) beziehungsweise P'(B) werden bevorzugt die bereits genannten Monomere des Typs A und B eingesetzt.

Die Diblockcopolymere weisen dabei üblicherweise ein zahlengemitteltes mittleres Molekulargewicht $M_n$ zwischen 5.000 und 600.000 g/mol, bevorzugt zwischen 15.000 und 400.000 g/mol und besonders bevorzugt zwischen 30.000 und 300.000 g/mol. Sie besitzen vorteilhaft eine Polydispersität $D = M_w/M_n$, die nicht größer als 3 ist. Günstig ist dabei, wenn der Anteil der Polymerblöcke P(A) in Bezug auf die Zusammensetzung des Diblockcopolymers zwischen 3 und 50 Gew.-% oder sogar zwischen 5 und 35 Gew.-% liegt.

Typische Einsatzmengenverhältnisse von Diblockcopolymeren im Blend liegen bei maximal 250 Gewichtsteilen auf 100 Gewichtsteile Blockcopolymer, das die Einheit P(A)-P(B)-P(A) enthält. Die Polymere P'(A) beziehungsweise P'(B) können dabei als Homo- und auch ais Copolymere aufgebaut sein. Sie werden entsprechend dem oben gesagten häufig derart gewählt, dass sie mit den Polymorblöcken P(A) beziehungsweise P(B) des obigen Blockcopolymers verträglich sind. Die Kettenlänge der Polymere P'(A) beziehungsweise P'(B) ist in bevorzugter Weise derart gewählt, dass sie die Kettenlängen des jeweiligen mit ihnen mischbaren und/oder assoziierbaren Polymerblocks nicht übersteigt, vorteilhaft um einen Betrag von etwa 10 % geringer als diese oder sogar um 20 % niedriger. Der B-Block kann auch so gewählt werden, dass seine Länge die Hälfte der Blocklänge des B-Blocks des Triblockcopolymers nicht übersteigt.

Insgesamt können die Zusammensetzungen für die Klebemassen durch Veränderung von Art und Anteil der Edukte in weiten Rahmen variiert werden. Ebenso können weitere Produkteigenschaften wie beispielsweise Farbe, thermische oder elektrische Leitfähigkeit durch Zusatz von Hilfsstoffen gezielt gesteuert werden. Dazu kann eine Klebemasse weitere Rezeptierungsbestandteile und/oder Hilfsstoffe umfassen wie zum Beispiel Weichmacher (Plastifizierungsmittel), Füllstoffe (wie zum Beispiel Fasern, Zinkoxidpartikel, Voll- oder Hohlglaskugeln, Mikrokugeln aus anderen Materialien, Kieselsäure, Silikate), elektrisch leitfähige Materialien (etwa undotierte oder dotierte konjugierte Polymere oder Metallsalze) und/oder Alterungsschutzmittel (etwa primäre oder sekundäre Antioxidantien) oder Lichtschutzmittel. Wichtig ist hierbei allerdings, dass diese weiteren Bestandteile die Transmission der Haftklebemasse für Licht aus einem

bestimmten Wellenlängenbereich nicht oder nur unwesentlich verringern. Neben der Art des Hilfsstoffes hängt dies von der Konzentration des Hilfsstoffes in der Klebemasse sowie der konkreten Anwendungsform des Hilfsstoffes ab, beispielsweise der mittleren Partikelgröße. Die Rezeptierung der Klebemasse mit derartigen weiteren Bestandteilen wie zum Beispiel Füllstoffen und Weichmachern, ist ebenfalls Stand der Technik.

Um die konkreten klebtechnischen Eigenschaften der Klebemasse der jeweiligen Anwendung anzupassen, können den Haftklebemassen klebkraftsteigernde oder klebrigmachende Harze beigemischt sein. Als derartige Harze - so genannte Klebharze - sind ausnahmslos alle bekannten und in der Literatur beschriebenen Klebharze einsetzbar, die die Transparenz der Klebemasse nicht verringern. Übliche Klebharze sind etwa Pinenharze, Indenharze und Kolophoniumharze, deren disproportionierte, hydrierte, polymerisierte und veresterte Derivate und Salze, die aliphatischen und aromatischen Kohlenwasserstoffharze, Terpenharze und Terpenphenolharze sowie $C_5$-, $C_9$- sowie andere Kohlenwasserstoffharze. Diese und weitere Harze können einzeln oder in beliebigen Kombinationen eingesetzt werden, um die Eigenschaften der resultierenden Klebemasse anwendungsgemäß einzustellen. Im allgemeinen lassen sich alle mit dem entsprechenden thermoplastischen Material kompatiblen (löslichen) Harze einsetzen, insbesondere aliphatische, aromatische oder alkylaromatische Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Hierbei ist in besonderem Maße zu beachten, dass ausschließlich sehr gut mit dem Polymer verträgliche und im Wesentlichen transparente Harze eingesetzt werden. Diese Anforderungen erfüllen unter anderem einige hydrierte oder teilhydrierte Harze. Bei der Auswahl der Harze ist natürlich ebenfalls ein etwaiger Einfluss auf den Brechungsindex zu berücksichtigen. So können einige Harze mit hohem hydrierten und aliphatischen Anteil den Brechungsindex beispielsweise absenken, während andere Harze mit hohem aromatischen Anteil den Brechungsindex anheben.

Zur Polymerisation werden die Monomere so ausgewählt, dass die resultierenden verklebbaren Polymere bei Raumtemperatur oder höheren Temperaturen als Hitze-aktivierbare Klebemassen oder als Haftklebemassen eingesetzt werden können, insbesondere, dass die resultierenden Basispolymere klebende oder haftklebende Eigenschaften im Sinne des "Handbook of Pressure Sensitive Adhesive Technology" von Donatas Satas (van Nostrand, New York 1989) aufweisen. Eine gezielte Steuerung der Glasübergangstemperatur lässt sich hierzu etwa über die Zusammenstellung der Monomermischung steuern, die der Polymerisation zugrunde liegt.

Zur Erzielung einer Glasübergangstemperatur $T_G$ der Polymere von $T_G \geq 25$ °C für Hitze-aktivierbare Klebemassen werden die Monomere etwa derart ausgesucht und die mengenmäßige Zusammensetzung der Monomermischung so gewählt, dass sich der gewünschte Wert der Glasübergangstemperatur $T_G$ für das Polymer nach Gleichung (G1) in Analogie zu der von Fox vorgestellten Gleichung (vgl. T. G. Fox, Bull. Am. Phys. Soc. 1 (1956) 123) wie folgt ergibt:

$$\frac{1}{T_G} = \sum_n \frac{w_n}{T_{G,n}} \qquad \text{(G1)} .$$

Hierin stellt n die Laufzahl über die eingesetzten Monomere dar, $w_n$ den Massenanteil des jeweiligen Monomers n (in Gew.-%) und $T_{G,n}$ die jeweilige Glasübergangstemperatur des Homopolymers aus dem jeweiligen Monomer n (in K).

Die Herstellung der Poly(meth)acrylathaftklebemassen kann in den üblichen Syntheseverfahren für derartige Polymere erfolgen, zum Beispiel in konventionellen radikalischen Polymerisationen oder in kontrollierten radikalischen Polymerisationen. Für die radikalisch verlaufenden Polymerisationen werden Initiatorsysteme eingesetzt, die weitere radikalische Initiatoren zur Polymerisation enthalten, insbesondere thermisch zerfallende radikalbildende Azo- oder Peroxo-Initiatoren. Prinzipiell eignen sich jedoch alle dem Fachmann geläufigen für Acrylate üblichen Initiatoren. Die Erzeugung von C-zentrierten Radikalen ist etwa im Houben-Weyl, Methoden der Organischen Chemie, Vol. E 19a, S. 60 - 147 beschrieben. Diese Methoden können unter anderem in analoger Weise angewendet werden.

Beispiele für Radikalquellen von geeigneten Radikalinitiatorsystemen sind zum Beispiel Peroxide, Hydroperoxide und Azoverbindungen, wie Kaliumperoxodisulfat, Dibenzoylperoxid, Cumolhydroperoxid, Cyclohexanonporoxid, Di-t-Butylperoxid, Azodiisobutyronitril (AIBN), Cyclohexylsulfonylacetylperoxid, Diisopropyl-percarbonat, t-Butylperoctoat, Benzpinacol und dergleichen. So kann beispielsweise als radikalischer Initiator 1,1'-Azo-bis-(cyclohexancarbonsäurenitril) eingesetzt werden, der unter der Bezeichnung Vazo 88™ von der Firma DuPont im Handel erhältlich ist.

Die zahlengemittelten mittleren Molekulargewichte $M_n$ der bei der radikalischen Polymerisation entstehenden Klebemassen werden zum Beispiel so gewählt, dass sie in einem Bereich von 200.000 bis 4.000.000 g/mol liegen; speziell für eine Verwendung als Schmelzhaftkleber werden Haftklebemassen mit mittleren Molekulargewichten $M_n$ von 400.000 bis 1.400.000 g/mol hergestellt. Die Bestimmung des mittleren Molekulargewichtes erfolgt über Größenausschlusschromatographie (SEC) oder Matrix-unterstützte Laser-Desorption/Ionisations-Massenspektrometrie (MALDI-

MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Üblicherweise soll dabei die verwendete Lösungsmittelmenge so gering wie möglich gehalten werden. Geeignete organische Lösungsmittel sind etwa reine Alkane (beispielsweise Hexan, Heptan, Octan, Isooctan), aromatische Kohlenwasserstoffe (beispielsweise Benzol, Toluol, Xylol), Ester (beispielsweise Essigsäureethylester, Essigsäurepropylester, Essigsäurebutylester oder Essigsäurehexylester), halogenierte Kohlenwasserstoffe (beispielsweise Chlorbenzol), Alkanole (wie beispielsweise Methanol, Ethanol, Ethylenglykol, Ethylenglykolmonomethylether) und Ether (beispielsweise Diethylether, Dibutylether) sowie Gemische davon. Wässrige Polymerisationsreaktionen können mit einem mit Wasser mischbaren oder hydrophilen Colösungsmittel versetzt werden, um sicherzustellen, dass das Reaktionsgemisch während des Monomerumsatzes als homogene Phase vorliegt. Verwendbar sind zum Beispiel Colösungsmittel aus der Gruppe, bestehend aus aliphatischen Alkoholen, Glykolen, Ethern, Glykolethern, Pyrrolidinen, N-Alkylpyrrolidinonen, N-Alkylpyrrolidonen, Polyethylenglykolen, Polypropylenglykolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen sowie Derivaten und Gemischen davon.

Die Polymerisationsdauer kann - je nach Umsatz und Temperatur - zwischen 2 und 72 Stunden betragen. Je höher die Reaktionstemperatur gewählt werden kann, das heißt, je höher die thermische Stabilität des Reaktionsgemisches ist, desto kürzer kann die Reaktionsdauer ausfallen.

Zur Initiierung der Polymerisation ist für thermisch zerfallende Initiatoren die Zufuhr von Wärme wesentlich. Die Polymerisation kann - je nach Initiatortyp - für solche thermisch zerfallenden Initiatoren durch Erwärmen auf 50 ˚C bis 160 ˚C gestartet werden.

Um Poly(meth)acrylathaftklebemassen mit einer engen Molekulargewichtsverteilung zu erhalten, werden auch kontrollierte radikalische Polymerisationen durchgeführt. Zur Polymerisation wird dann bevorzugt ein Kontrollreagenz mit der folgenden allgemeinen Formel eingesetzt:

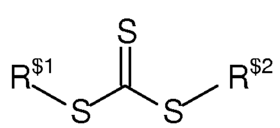

(TTC 1)

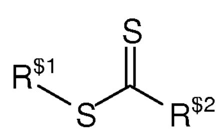

(THE 1)

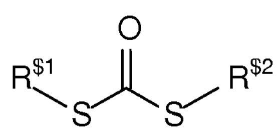

(THI 1)

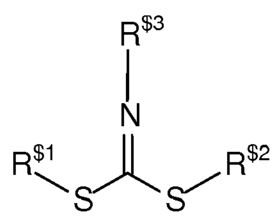

(THI 2)

$R^{\$1}$ und $R^{\$2}$ können hierfür gleich oder unabhängig voneinander gewählt werden und $R^{\$3}$ gegebenenfalls zu einer oder beiden Gruppen $R^{\$1}$ und $R^{\$2}$ identisch oder unterschiedlich gewählt werden. Die Reste werden dabei sinnvollerweise aus einer der folgenden Gruppen gewählt:

- $C_1$- bis $C_{18}$-Alkylreste, $C_3$- bis $C_{18}$-Alkenylreste und $C_3$- bis $C_{18}$-Alkinylreste, jeweils linear oder verzweigt;

- $C_1$- bis $C_{18}$-Alkoxyreste;

- $C_1$- bis $C_{18}$-Alkylreste, $C_3$- bis $C_{18}$-Alkenylreste und $C_3$- bis $C_{18}$-Alkinylreste, jeweils durch zumindest eine OH-Gruppe oder ein Halogenatom oder einen Silylether substituiert;

- $C_2$- bis $C_{18}$-Hetero-Alkylreste mit mindestens einem O-Atom und/oder einer NR*-Gruppe in der Kohlenstoffkette, wobei R* ein beliebiger Rest ist, insbesondere ein organischer Rest;

- $C_1$- bis $C_{18}$-Alkylreste, $C_3$- bis $C_{18}$-Alkenylreste und $C_3$- bis $C_{18}$-Alkinylreste, jeweils mit zumindest einer Estergruppe,

Amingruppe, Carbonatgruppe, Cyanogruppe, Isocyanogruppe und/oder Epoxidgruppe und/oder mit Schwefel substituiert;

- $C_3$- bis $C_{12}$-Cycloalkylreste;
- $C_6$- bis $C_{18}$-Arylreste und $C_6$- bis $C_{18}$-Benzylreste;
- Wasserstoff.

Kontrollreagenzien des Typs TTC 1 stammen dabei üblicherweise aus Verbindungsklassen der vorstehend aufgelisteten Typen, die im Folgenden zusätzlich spezifiziert sind:

Die jeweiligen Halogenatome sind Chlor und/oder Brom und/oder gegebenenfalls auch Fluor und/oder Jod.

Die Alkyl-, Alkenyl- und Alkinylreste in den verschiedenen Substituenten weisen lineare und/oder verzweigte Ketten auf.

Beispiele für Alkylreste, die 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.

Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octonyl, n-2-Dodecenyl, Isododecenyl und Oleyl.

Beispiele für Alkinyl mit 3 bis 18 Kohlenstoffatomen sind Propinyl, 2-Butinyl, 3-Butinyl, n-2-Octinyl und n-2-Octadecinyl.

Beispiele für Hydroxy-substituierte Alkylreste sind Hydroxypropyl, Hydroxybutyl und Hydroxyhexyl.

Beispiele für Halogen-substituierte Alkylreste sind Dichlorbutyl, Monobrombutyl und Trichlorhexyl.

Ein üblicher $C_2$- bis $C_{18}$-Hetoro-Alkylrest mit mindestens einem O-Atom in der Kohlenstoffkette ist beispielsweise $-CH_2-CH_2-O-CH_2-CH_3$.

Als $C_3$- bis $C_{12}$-Cycloalkylreste dienen beispielsweise Cyclopropyl, Cyclopentyl, Cyclohexyl und Trimethylcyclohexyl.

Als $C_6$- bis $C_{18}$-Arylreste dienen beispielsweise Phenyl, Naphthyl, Benzyl, 4-tert-Butylbenzyl oder andere substituierte Phenyle wie etwa solche, die mit einer Ethylgruppe und/oder mit Toluol, Xylol, Mesitylen, Isopropylbenzol, Dichlorbenzol oder Bromtoluol substituiert sind.

Die vorstehende Auflistung bietet hierbei lediglich Beispiele für die jeweiligen Verbindungsklassen und ist daher nicht vollständig.

Ferner ist es möglich, die Polymerisation der (Meth)Acrylathaftklebemassen in der Substanz durchzuführen, ohne Zusatz von Lösemitteln. Dies kann nach üblichen Methoden geschehen, etwa mittels einer Präpolymerisation. Dabei wird die Polymerisation mit Licht aus dem UV-Bereich des Spektrums initiiert und die Reaktion bis zu einem geringen Umsatz von etwa 10-30 % fortgesetzt. Die so erhaltene hochviskose Präpolymermasse kann anschließend als Polymersirup weiterverarbeitet werden, wobei es beispielsweise möglich ist, das Reaktionsgemisch zunächst in Folien eingeschweißt zu lagern - etwa in Eiswürfelschläuchen - und schließlich in Wasser zu einem hohem Endumsatz zu polymerisieren.

Die so erhaltenen Pellets lassen sich etwa als Acrylatschmelzkleber (Hot-melt) einsetzen, wobei ein Aufschmelzen auf Folienmaterialien durchgeführt wird, die mit dem erhaltenen Polyacrylatprodukt kompatibel sind.

Als weiterer geeigneter Herstellprozess sei auf eine Variante der RAFT-Polymerisation (reversible addition-fragmentation chain transfer polymerization) hingewiesen. Ein derartiger Polymerisationsprozess ist zum Beispiel in WO 98/01478 A1 ausführlich beschrieben. Hierbei wird üblicherweise nur bis zu geringen Umsätzen polymerisiert, um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflussen würde, die Restmonomere beim Aufkonzentrieren das Lösemittelrecyclat verunreinigen und die damit gefertigten Selbstklebebänder ein starkes Ausgasungsverhalten zeigen würden. Um den Nachteil niedriger Umsätze zu umgehen, kann die Polymerisation mehrfach initiiert werden.

Als weitere kontrollierte radikalische Polymerisationsmethode können Nitroxid-gesteuerte Polymerisationen durchgeführt werden. Zur Radikalstabilisierung können dabei übliche Radikalstabilisatoren eingesetzt werden, etwa Nitroxide des Typs (NIT 1) oder (NIT 2) eingesetzt:

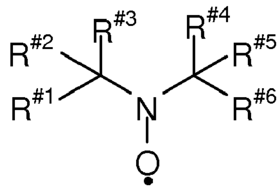

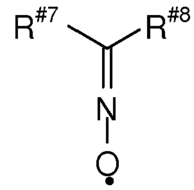

(NIT 1) (NIT 2)

wobei $R^{\#1}$, $R^{\#2}$, $R^{\#3}$, $R^{\#4}$ , $R^{\#5}$, $R^{\#6}$ , $R^{\#7}$ , $R^{\#8}$ unabhängig voneinander folgende Atome oder Gruppen darstellen können:

i) Halogenide wie zum Beispiel Chlor, Brom oder Jod,

ii) lineare, verzweigte, cyclische und heterocyclische Kohlenwasserstoffe mit 1 bis 20 Kohlenstoffatomen, die gesättigt, ungesättigt oder aromatisch sein können,

iii) Ester $-COOR^{\#9}$, Alkoxide $-OR^{\#10}$ und/oder Phosphonate $-PO(OR^{\#11})_2$, wobei $R^{\#9}$, $R^{\#10}$ und/oder $R^{\#11}$ für Reste aus der obigen Gruppe ii) stehen.

Verbindungen der Struktur (NIT 1) oder (NIT 2) können auch an Polymerketten jeglicher Art gebunden sein (vorrangig in dem Sinne, dass zumindest einer der oben genannten Reste eine derartige Polymerkette darstellt) und somit beim Aufbau von Blockcopolymeren als Makroradikale oder Makroregler genutzt werden.

Als kontrollierte Regler für die Polymerisation können ebenfalls Verbindungen der folgenden Typen eingesetzt werden:

- 2,2,5,5-Tetramethyl-1-pyrrolidinyloxyl (PROXYL), 3-Carbamoyl-PROXYL, 2,2-Dimethyl-4,5-cyclohexyl-PROXYL, 3-oxo-PROXYL, 3-Hydroxylimin-PROXYL, 3-Aminomethyl-PROXYL, 3-Methoxy-PROXYL, 3-t-Butyl-PROXYL, 3,4-Di-t-butyl-PROXYL

- 2,2,6,6-Tetramethyl-1-piperidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl

- N-tert-Butyl-1-phenyl-2-methylpropylnitroxid

- N-tert-Butyl-1-(2-naphthyl)-2-methylpropylnitroxid

- N-tert-Butyl-1-diethylphosphono-2,2-dimethylpropylnitroxid

- N-tert-Butyl-1-dibenzylphosphono-2,2-dimethylpropylnitroxid

- N-(1-Phenyl-2-methyl propyl)-1-diethylphosphono-1-methylethylnitroxid

- Di-t-Butylnitroxid

- Diphenylnitroxid

- t-Butyl-t-amylnitroxid

Eine Reihe weiterer Polymerisationsmethoden, nach denen Klebemassen in alternativer Vorgehensweise hergestellt werden können, lassen sich aus dem Stand der Technik wählen:

So offenbart US 4,581,429 A ein kontrolliert radikalisches Polymerisationsverfahren, das als Initiator eine Verbindung der allgemeinen Formel R'R"N-O-Y anwendet, worin Y eine freie radikalische Spezies ist, die ungesättigte Monomere polymerisieren kann. Die Reaktionen weisen aber im Allgemeinen geringe Umsätze auf. Besonders problematisch ist die Polymerisation von Acrylaten, die nur zu sehr geringen Ausbeuten und bei geringen Molekularmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molekulargewichtverteilungen. WO 96/24620 A1 beschreibt ein Polymerisationsverfahren, bei dem spezielle Radikalverbindungen wie zum Beispiel phosphorhaltige, auf Imidazolidin basierende Nitroxide eingesetzt werden. WO 98/44008 A1 offenbart spezielle Nitroxyle, die auf Morpholinen, Piperazinonen und Piperazindionen basieren. DE 199 49 352 A1 beschreibt heterocyclische Alkoxyamine als Regulatoren in kontrolliert radikalischen Polymerisationen. Ferner können entsprechende Weiterentwicklungen der Alkoxyamine und der korrespondierenden freien Nitroxide die Effizienz zur Herstellung von Polyacrylaten verbessern.

Als weitere kontrollierte Polymerisationsmethode lässt sich zur Synthese der Copolymere die "Atom Transfer Radical Polymerization" (ATRP; siehe oben) einsetzen, wobei als Initiator üblicherweise monofunktionelle oder difunktionelle sekundäre oder tertiäre Halogenide und zur Abstraktion des Halogenids bzw. der Halogenide Cu-, Ni-, Fe-, Pd-, Pt-, Ru-, Os-, Rh-, Co-, Ir-, Ag- oder Au-Komplexe (vgl. etwa EP 824 110 A1, EP 0 824 111 A1, EP 826 698 A1, EP 841 346 A1 oder EP 850 957 A1) eingesetzt werden. Unterschiedliche Möglichkeiten der ATRP sind ferner in US 5,945,491 A, US 5,854,364 A und US 5,789,487 A beschrieben.

Weiterhin kann ein Polymer für eine Poly(meth)acrylathaftklebemassen in einer lebenden Polymerisation hergestellt werden, beispielsweise in einer anionischen Polymerisation, wozu als Reaktionsmedium üblicherweise inerte Lösungsmittel zum Einsatz kommen, etwa aliphatische und cycloaliphatische Kohlenwasserstoffe oder aromatische Kohlenwasserstoffe.

Das lebende Polymer wird dabei im Allgemeinen als $P_L$(A)-Me dargestellt, wobei Me ein Metall der Gruppe I des Periodensystems ist (beispielsweise Lithium, Natrium oder Kalium) und $P_L$(A) ein wachsender Polymerblock aus den Acrylatmonomeren ist. Das Molekulargewicht des Polymers wird hierbei durch das Verhältnis von Initiatorkonzentration zu Monomerkonzentration vorgegeben.

Als Polymerisationsinitiatoren eignen sich etwa n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und auch einsetzbar.

Weiterhin lassen sich auch difunktionelle Initiatoren einsetzen wie beispielsweise 1,1,4,4-Tetraphenyl-1,4-dilithiumbutan oder 1,1,4,4-Tetraphenyl-1,4-dilithiumisobutan. Ebenfalls verwendet werden können Coinitiatoren wie zum Beispiel Lithiumhalogenide, Alkalimetallalkoxide oder Alkylaluminium-Verbindungen. So können etwa die Liganden und Coinitiatoren so gewählt sein, dass Acrylatmonomere wie zum Beispiel n-Butylacrylat und 2-Ethylhexylacrylat direkt polymerisiert werden können und nicht im Polymer durch Umesterung mit dem entsprechenden Alkohol generiert werden müssen.

Die obenstehend dargestellten Klebemassen sowie weitere Klebemassen, die hier nicht ausführlich beschrieben, dem Fachmann jedoch ohne weiteres als Klebemassen bekannt sind, werden erfindungsgemäß in herkömmlichen Verfahren auf die Trägerfolie aufgetragen. Entsprechend dem jeweiligen Auftragungsverfahren kann die Klebemasse aus Lösung beschichtet werden. Zur Abmischung des Basispolymers mit weiteren Bestandteilen wie etwa Modifikationsharzen oder Hilfsstoffen können hierbei alle bekannten Misch- oder Rührtechniken eingesetzt werden. So können beispielsweise zur Herstellung einer homogenen Mischung statische oder dynamische Mischaggregate zum Einsatz gelangen. Eine Abmischung des Basispolymers mit Reaktivharzen kann aber auch in der Schmelze durchgeführt werden. Hierfür können Kneter oder Doppelschneckenextruder zum Einsatz kommen. Die Abmischung erfolgt bevorzugt in der Wärme, wobei die Mischungstemperatur deutlich niedriger sein sollte als die Aktivierungstemperatur für reaktive Prozesse im Mischaggregat, etwa für eine Reaktion der Epoxidharze.

Für eine Auftragung der Klebemasse aus der Schmelze kann das Lösemittel in einem Aufkonzentrationsextruder unter vermindertem Druck abgezogen werden, wozu beispielsweise Ein- oder Doppelschneckenextruder eingesetzt werden können, die bevorzugt das Lösemittel in der gleichen Vakuumstufe oder in verschiedenen Vakuumstufen abdestillieren und über eine Vorwärmung der Einspeisung verfügen. Vorteilhafterweise ist der Anteil an restlichem Lösemittel kleiner als 1 Gew.-% oder sogar kleiner als 0,5 Gew.-%.

Ferner können zusätzlich Vernetzer sowie Promotoren zur Vernetzung beigemischt werden. Geeignete Vernetzer für die Elektronenstrahlvernetzung und UV-Vernetzung sind beispielsweise bi- oder multifunktionelle Acrylate, bi- oder multifunktionelle Isocyanate (auch in blockierter Form) oder bi- oder multifunktionelle Epoxide. Weiterhin können auch thermisch aktivierbare Vernetzer der Reaktionsmischung hinzugesetzt sein, etwa Lewis-Säuren, Metallchelate oder multifunktionelle Isocyanate.

Für eine optionale Vernetzung der Klebemassen können diesen beliebige geeignete Initiatoren und/oder Vernetzer zugesetzt werden. So können die Klebemassen beispielsweise für eine spätere Vernetzung während Bestrahlung mit UV-Licht UV-absorbierende Photoinitiatoren enthalten. Beispiele für geeignete Photoinitiatoren sind Benzoinether wie etwa Benzoinmethylether oder Benzoinisopropylether, substituierte Acetophenone wie etwa Dimethoxyhydroxyacetophenon oder 2,2-Diethoxyacetophenon (erhältlich als Irgacure 651® von Ciba Geigy), 2,2-Dimethoxy-2-phenyl-1-phenylethanon, substituierte α-Ketole wie etwa 2-Methoxy-2-hydroxypropiophenon, aromatische Sulfonylchloride wie etwa 2-Naphthylsulfonylchlorid und photoaktive Oxime wie etwa 1-Phenyl-1,2-propandion-2-(O-ethoxycarbonyl)oxim.

Die einsetzbaren Photoinitiatoren und andere Initiatoren vom Typ Norrish I oder Norrish II können substituiert sein und hierbei beliebige geeignete Reste aufweisen, beispielsweise Benzophenon-, Acetophenon-, Benzil-, Benzoin-, Hydroxyalkylphenon-, Phonylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin- oder Fluorenonreste, wobei diese Reste natürlich ihrerseits substituiert sein können, etwa mit einem oder mehreren Halogenatomen, Alkyloxygruppen, Aminogruppen und/oder Hydroxygruppen. Einen repräsentativen Überblick bietet hierzu Fouassier in "Photoinititation, Photopolymerization and Photocuring: Fundamentals and Applications" (Hanser-Verlag, München 1995) und - ergänzend - Carroy et al. in "Chemistry and Technology of UV and EB Formulation for Coatings, Inks and Paints" (Oldring (Hrsg.), 1994, SITA, London).

An der zweiten Seitenfläche des Trägers weist das Flächenelement das temporäre Abdeckungsmittel auf. Auch dieses ist flächenförmig ausgebildet und weist somit eine flächige Hauptausdehnung aus. Ein parallel zu der Hauptausdehnung angeordneter Teil des temporären Abdeckungsmittels ist dabei als Trägerabschnitt ausgebildet, der innerhalb des temporären Abdeckungsmittels als Träger dient und so dessen Formstabilität und Zusammenhalt gewährleistet. Des weiteren weist ein parallel zu der Hauptausdehnung angeordneter Teil des temporären Abdeckungsmittels einen Haftabschnitt auf, der mit dem Träger an der zweiten Seitenfläche des Trägers rückstandsfrei ablösbar verbunden ist, so dass bei einem späteren Ablösen des temporären Abdeckungsmittels vom Träger auf der Oberfläche des Trägers keine die optische Transparenz beeinträchtigenden Reste des temporären Abdeckungsmittels verbleiben, beispielsweise Klebemassenreste. Hierbei handelt es sich um eine direkte Verbindung beliebiger Art, in der das temporäre Abdekkungsmittel direkt mit der Oberfläche des Trägers verbunden ist. Als direkte Verbindung zweier Materialien wird vorliegend jegliche Verbindung erachtet, in der die beiden Materialien miteinander verbunden sind, ohne dass zwischen diesen beiden ein weiteres, die beiden Materialien verbindendes Material angeordnet ist.

Die konkrete Ausformung der Verbindung zwischen Haftabschnitt und Träger kann vorliegend beliebig sein, sofern diese im besonderen geeignet ist, und beispielsweise in einer Anordnung einer Vielzahl an einzelnen Haftpunkten oder Haftlinien bestehen oder vollflächig ausgeführt sein, solange sich insgesamt eine vollflächige Abdeckung der Oberfläche des Trägers mit dem temporären Abdeckungsmittel ergibt und ein rückstandsfreies Ablösen möglich ist. Demzufolge kann der Haftabschnitt des temporären Abdeckungsmittels beispielsweise mit dem Trägerabschnitt identisch sein, so dass der Trägerabschnitt selbst direkt mit dem Träger verbunden ist. Dadurch ist das temporäre Abdekkungsmittel direkt und klebemassenlos mit dem Träger rückstandsfrei ablösbar verbunden. Diese Variante ist etwa dann möglich, wenn das temporäre Abdeckungsmittel einstückig ausgeführt ist, beispielsweise als Schutzfolie mit einer hohen Eigenklebrigkeit (Tackigkeit) hinsichtlich der Oberfläche der zweiten Seitenfläche des Trägers, was etwa durch ein gezieltes Abstimmen der Materialien des Trägerabschnitts des temporären Abdeckungsmittels und des Trägers aufeinander erreicht werden kann. Dies entspricht demnach einer Ausführung des Haftabschnitts als integraler Bestandteil einer Abdeckungsfolie des temporären Abdeckungsmittels.

Ebenfalls kann der Haftabschnitt des temporären Abdeckungsmittels eine Abdeckungsmittelklebemasse umfassen, die von dem Trägerabschnitt verschieden ist und die das temporäre Abdeckungsmittel mit dem Träger rückstandsfrei ablösbar verbindet. Die Abdeckungsmittelklebemasse kann dabei beliebig ausgewählt werden, solange sie rückstandsfrei vom Träger ablösbar ist.

Vorzugsweise kann durch die Wahl einer geeigneten Kombination der Materialien von Träger und Haftabschnitt des temporären Abdeckungsmittels ein temporäres Abdeckungsmittel erhalten werden, das auf dem Träger eine Klebkraft von weniger als 1,0 N/cm aufweist, bevorzugt von weniger als 0,5 N/cm, besonders bevorzugt von weniger als 0,1 N/cm. Dies kann beispielsweise durch Auswahl geeigneter Polymerkombinationen von Träger und Abdeckungsfolie oder Klebemasse erfolgen oder aber etwa durch Auftragen einer haftvermindernden Schicht auf die zweite Seitenfläche des Trägers.

Durch diese Maßnahmen dient das temporäre Abdeckungsmittel und insbesondere dessen Trägerabschnitt als eine die zweite Seitenfläche des Trägers beschädigungsfrei haltende Abdeckung, mittels derer eine Beschädigung dieser Seitenfläche während der Lagerung und Weiterverarbeitung des Flächenelements und daraus gefertigter Produkte im wesentlichen vermieden wird.

Dabei kann zumindest eine der beiden zu der Hauptausdehnung parallelen Seitenflächen des Trägerabschnitts stabil gegenüber mechanischer Beanspruchung ausgebildet sein. Dies beinhaltet eine Vielzahl an unterschiedlichen Ausbildungen. So kann zum einen das Material des temporären Abdeckungsmittels derart gewählt werden, dass es mechanisch stabil ist. Dies kann neben der Wahl eines geeigneten Polymers mit entsprechender Reißfestigkeit auch die Auswahl eines mehrlagigen temporären Abdeckungsmittels umfassen, bei dem eine oder mehrere Lagen zusätzlich zu dem Trägerabschnitt strukturverstärkend ausgebildet sind, etwa als aufgetragener Lack, als Gewebe oder dergleichen. Strukturverstärkende Elemente können ebenfalls in die Polymermasse eingebettet vorliegen, etwa in Form von Fasern. Eine Beständigkeit des Trägerabschnitts gegenüber Chemikalien lässt sich in analoger Weise erzielen, zum Beispiel durch die Wahl eines bei Exposition im Wesentlichen inerten Polymers oder durch gezieltes Beschichten,

Laminieren oder Belacken mit einem inerten Material als Schutzschicht.

Wichtig ist hierbei, dass der Trägerabschnitt des temporären Abdeckungsmittel insgesamt eine Biegesteifigkeit von höchstens 0,01 mNm besitzt, bevorzugt von höchstens 0,005 mNm und besonders bevorzugt von höchstens 0,004 mNm. Die im Rahmen dieser Schrift beschriebene Biegesteifigkeit bezieht sich auf Werte, die gemäß DIN 53121 nach der Balkenmethode in einem Zweipunktverfahren bei einem Biegewinkel von 5 ˚ bestimmt wurden.

Die erforderliche Biegesteifigkeit des Trägerabschnitts lässt sich ebenfalls durch geeignete Maßnahmen erzielen, etwa eine geeignete Materialwahl oder durch gezieltes Anpassen der Dicke (Nebenausdehnung) des Trägerabschnitts, etwa durch den Einsatz von Polymorfolien geringer Dicke, wobei in letzterem Fall darauf zu achten ist, dass das temporäre Abdeckungsmittel insgesamt hinreichend mechanisch stabil ist. Werden Trägerabschnitte mit höheren Biegesteifigkeiten eingesetzt, so kommt es nach dem Ablösen des temporären Abdeckungsmittels zum Auftreten von Oberflächendeformationen am verklebten Flächenelement, die dessen Transparenz signifikant beeinträchtigten.

Als Trägerabschnitt des temporären Abdeckungsmittels können eine Vielzahl von Polymorfolien oder Polymerfolienverbünde eingesetzt werden. So eignen sich beispielsweise polyolefinische Folien wie etwa solche aus Polyethylen oder Polypropylen. Derartige Systeme können neben Ethylen auch andere Comonomere enthalten, etwa Cyclohexen oder Norbonenderivate, sowie eine Vielzahl anderer olefinischer Comonomere.

Statt Folien auf Polyolefinbasis lassen sich zum Beispiel auch solche auf der Basis von Polyvinylchlorid (PVC) einsetzen. Diese Folien können weitere Additive wie etwa Weichmacher enthalten, um die Flexibilität oder Eigenklebrigkeit der Folie zu erhöhen. Ein weiteres mögliches Folienmaterial ist thermoplastisches Urethan (TPU).

Generell sollten die Trägerabschnitte des temporären Abdeckungsmittels in einer bevorzugten Auslegung der Erfindung eine statische Glasübergangstemperatur von weniger als 25˚C aufweisen. Hierdurch besitzt die Folie eine hinreichende Anfassklebrigkeit (Tackigkeit) auf dem Träger. Derselbe Effekt kann beispielsweise auch durch Zusatz von Weichmachern erzielt werden.

In einer weiteren Ausführung der Erfindung besteht das temporäre Abdeckungsmittel aus einem schwach klebenden einseitigen Haftklebeband. Für diesen Fall der erfinderischen Auslegung können wiederum alle bekannten Folientypen als Trägerabschnitt eingesetzt werden, die eine Schutzfunktion bei üblichen Verarbeitungstemperaturen aufweisen. Als Haftabschnitt werden bevorzugt Haftklebemassen eingesetzt, die eine schwache Klebkraft auf dem Träger des Flächenelements aufweisen. Die Klebkraft nach PSTC-1 beträgt bevorzugt weniger als 1 N/cm, bevorzugt weniger als 0,5 N/cm und besonders bevorzugt weniger als 0,1 N/cm. Als Haftklebemassentypen können, ohne Anspruch auf Vollständigkeit zu besitzen, solche auf der Basis von Polyacrylaten, Naturkautschuken, Synthesekautschuken, Silikonen, Polyethylenvinylacetat, Butylkautschuken und Nitrilkautschuken eingesetzt werden. Ein weiteres Kriterium für das temporäre Abdeckungsmittel ist die rückstandsfreie Entfernbarkeit von dem Träger, dass also keine Reste der Klebemasse oder des temporären Abdeckungsmittels nach dem Abziehen auf dem Träger verbleiben dürfen.

Die Foliendicke des Trägerabschnitts des temporären Abdeckungsmittels beträgt in einer bevorzugten Auslegung der Erfindung zwischen 4 und 150 $\mu$m, besonders bevorzugt zwischen 12 und 100 $\mu$m.

Bevorzugt kann das Flächenelement vor der Verklebung auf einem Durchsichtelement auch einen temporären Träger umfassen, der von dem temporären Abdeckungsmittel verschieden ist. Dieser temporäre Träger ist an der Seite der Klebeschichtung angeordnet, die der mit der ersten Seitenfläche des Trägers verbundene Oberfläche der Klebeschichtung gegenüber liegt, und dabei mit der Klebeschichtung rückstandsfrei ablösbar verbunden. Dieser temporäre Träger dient hierbei dem Schutz der offenen liegenden unverklebten Klebemasse gegenüber unbeabsichtigter Verklebung sowie gegenüber Staub und sollte zudem eine hochglatte Oberfläche aufweisen, so dass die Klebeschichtung hierdurch keine einseitige Strukturierung erfährt. Als temporärer Träger eignen sich alle üblichen Trennsysteme, Trennfolien und Trennpapiere, etwa solche aus Glassine oder olefinische Folien wie Polyethylen hoher Dichte (HDPE) oder Polyethylen niedriger Dichte (LDPE), wobei hierfür aufgrund ihrer höchstglatten Oberflächen insbesondere Trennfolien geeignet sind. Zur Verbesserung der Trenneigenschaften können diese temporären Träger zusätzlich ein haftverminderndes System aufweisen, etwa eine silikonisierte Trennlage oder ein Trennmittel. Hochglatte Oberflächen für temporäre Träger lassen sich durch Verwendung von antiblockmittelfreien PET-Folien in Kombination von aus der Lösung aufgetragenen Silikonsystemen erreichen. Selbstverständlich lassen sich als temporäre Träger auch Folien einsetzen, die einen hohen Brechungsindex $n_d$ von mehr als 1,43 (20 ˚C) besitzen.

Zur Herstellung und Verarbeitung der verklebbaren Flächenelemente sind staubfreie Bedingungen von größter Bedeutung, da bereits geringe Staubmengen in der Verklebung als Streuzentren für das hindurchtretende Licht dienen und so die Transmission verringern. Vorzugsweise findet die Fertigung und Verarbeitung daher unter Reinraumbedingungen statt, nach Möglichkeit sogar in einem Reinstraum.

Bei der Herstellung wird nach Möglichkeit zunächst die Klebeschichtung in einem ersten Beschichtungsschritt auf eine Trennfolie aufgetragen. Wird dabei aus Lösung beschichtet, so kann die Klebeschichtung nach diesem ersten Beschichtungsschritt von in der Klebemasse verbliebenem Lösungsmittel befreit werden, etwa durch Abdampfen des Lösungsmittels in einem Trockenkanal. Anschließend wird zu auf die Trennfolie aufgebrachten Klebeschichtung eine Trägerfolie über eine Kaschierwalze zukaschiert. Dies geschieht vorteilhafterweise unter Druck, wobei anstelle dessen oder auch zusätzlich das System erhitzt werden kann. Temperatur und Anpressdruck der Kaschierwalze können dabei je nach

Aktivierungstemperatur und Fließverhalten der eingesetzten Klebemasse variieren. Abschließend wird das temporäre Abdeckmittel mit der Klebeschichtung verbunden.

Aus apparativen Gründen ist jedoch die Herstellung der Klebeschichtungen aus der Lösung bevorzugt, da hierbei niedrigere Verarbeitungstemperaturen gewählt werden können, wodurch die Ausbildung von kristallinen oder teilkristallinen Bereichen in der Klebemasse beim Auftragen und somit auch eine Abnahme der Transparenz infolge der kristallinen Streuzentren vermieden werden kann. Hierzu wird die Klebemasse in einem geeigneten Lösemittel gelöst und gleichmäßig auf den Träger aufgetragen, beispielsweise mit Hilfe eines Rakels oder einer Auftragdüse. Eine Auftragung aus der Lösung bietet zudem den Vorteil, dass sich so Klebeschichtungen mit hochglatten Oberflächen erzeugen lassen, die Verbindungen mit einer hohen Transparenz ermöglichen.

Unabhängig vom eingesetzten Verfahren werden alle Lösungen und Schmelzen vor dem Auftragen gefiltert, um Staub und andere feste Beimengungen wie etwa Polymerkristallite zu entfernen und so den Anteil an Streuzentren in der Klebemasse gering zu halten.

Ein so erhaltenes Flächenelement weist in der Verklebung ohne temporäre Abdeckung üblicherweise eine Dicke aus einem Bereich von 5 bis 300 $\mu$m auf, insbesondere aus einem Bereich von 10 bis 50 $\mu$m. Vorzugsweise beträgt der Klebemassenauftrag dabei zwischen 10 und 150 g/m$^2$, besonders bevorzugt zwischen 20 und 100 g/m$^2$.

Nach Beschichten des Trägers mit den Klebemassen wird nun aus dem so erhaltenen Flächenelement ein Stanzling in der gewünschten Form geschnitten oder gestanzt; in der Regel erfolgt zu diesem Zeitpunkt lediglich ein Schneiden auf Nutzbreite.

Ein derartiges Flächenelement lässt sich erfindungsgemäß als Splittersicherungseinrichtung verwenden, etwa zur Sicherung von Anzeigen in Konsumgüterelektronikbauteilen. Als Splittersicherungseinrichtung wird jede Einrichtung aufgefasst, die geeignet und angepasst ist, bei einer äußeren Krafteinwirkung auf einen zu schützenden Körper dessen Zersplittern bestmöglich zu verhindern. Dies kann etwa dadurch erreicht werden, dass weitgehend verhindert wird, dass etwaige Bruchstücke sich vollständig vom Körper ablösen und vereinzelt werden.

Üblicherweise ist es nicht möglich, mit Hilfe einer Splittersicherungseinrichtung einen vollständigen Schutz gegen jegliche Belastung zu erreichen. Jedoch bietet eine solche Sicherungseinrichtung in der Regel zumindest einen gewissen Schutz gegenüber üblichen Belastungen, etwa einen unbeabsichtigten Sturz des Körpers aus Höhen bis zu einigen Metern. Zudem kann es vorkommen, dass trotz Verwendung einer Splittersicherungseinrichtung ein kleiner Teil der beim Bruch entstehenden Splitter sich dennoch ablöst, wobei jedoch die größte Anzahl der Bruchstücke nicht vereinzelt werden, die Bruchstücke werden also zumindest im wesentlichen zusammengehalten. Idealerweise könnte eine Sicherungseinrichtung sogar einen Bruch des Körpers verhindern, etwa über eine strukturelle Verstärkung des Körpers. Eine Splittersicherungseinrichtung ist um so wichtiger, je spröder der Körper ist.

Zur Verwendung als Splittersicherungseinrichtung wird das erfindungsgemäße Flächenelement vollflächig an einem Durchsichtelement befestigt. Bei einer derartigen Befestigung können auch einzelne Teilbereiche der Oberfläche des Durchsichtelements nicht von dem Flächenelement bedeckt sein, wenn beispielsweise diese Teilbereiche innerhalb eines Gehäuses angeordnet sind, so dass eine äußere Kraft auf diese Teilbereiche nicht unmittelbar einwirken kann. Zur Erzielung einer Splittersicherung muss lediglich der von außen zugängliche Teilbereich eines spröden Flächenkörpers des Durchsichtelements von dem Flächenelement vollflächig bedeckt sein.

Als Durchsichtelement wird vorliegend jegliches Element verstanden, das zumindest einen transparenten Teilbereich aufweist, durch den es möglich ist, eine Anzeige zu betrachten. Der transparente Teilbereich des Durchsichtelements kann hierbei aus allen üblichen Materialien gefertigt sein und besteht idealerweise aus Glas. Der Teilbereich aus Glas ist dabei als spröder Flächenkörper für das Verbinden mit dem Flächenelement angepasst. Die Anpassung kann aus allen üblichen geeigneten Maßnahmen bestehen; im einfachsten Fall ist die Oberfläche des Teilbereichs zumindest im wesentlichen glatt ausgebildet, so dass ein dauerhaftes Verbinden mit der Klebeschichtung des Flächenelements über diesen Teilbereich möglich ist. Darüber hinaus kann eine solche Anpassung grundsätzlich auch weitere Maßnahmen umfassen, etwa ein Beschichten der Glasoberfläche mit einem haftungsvermittelnden Lack. Als dauerhafte Verbindung wird dabei jegliche Verbindung angesehen, die nicht zu einem Ablösen angepasst ist; dies kann etwa durch die Verwendung einer geeigneten Klebemasse als Klebeschichtung des Flächenelements erreicht werden.

Neben den transparenten Teilbereichen kann das Durchsichtelement zusätzlich auch nichttransparente Teilbereiche aufweisen. Diese nichttransparenten Teilbereiche können aus demselben Material wie ein transparenter Teilbereich gefertigt sein oder aus anderen Materialien. So können nichttransparente Teilbereiche beispielsweise als Halterungsabschnitt, Gehäuse oder als Rahmen zur Befestigung an anderen Bestandteilen des Geräts ausgebildet sein oder auch nur dekorativen Zwecken dienen, etwa eingefärbte Bereiche. Derartige eingefärbte Bereiche lassen sich etwa durch in die Oberfläche eingebettete oder auf diese aufgetragene Farbstoffe und Pigmente erhalten, beispielsweise mittels einer Lackbeschichtung und/oder durch lokale Metallisierung der Oberfläche.

Demzufolge ist die Splittersicherungseinrichtung als Klebeverbund ausgebildet, der das Durchsichtelement und das Flächenelement umfasst. Darüber hinaus kann der Klebeverbund auch noch weitere Elemente aufweisen, zum Beispiel Halterahmenelemente zum Fixieren des Klebeverbunds an einem Gehäuseteil.

Der Klebeverbund wird erfindungsgemäß als Beschädigungsschutzvorrichtung für eine Anzeigeeinrichtung

verwendet. Als Beschädigungsschutzvorrichtung wird jede Vorrichtung verstanden, die geeignet und angepasst ist, die Einschränkung der Funktionalität eines zu schützenden Körpers infolge äußerer einwirkender Kräfte zu verhindern.

Eine Anzeigeeinrichtung ist eine beliebige funktionale Einrichtung, die einen Anzeigebereich umfasst, auf dem bestimmte Informationen angezeigt werden, etwa Messwerte, Betriebszustände, gespeicherte oder empfangene Daten oder dergleichen. Die Anzeige auf dem Anzeigebereich kann dabei beliebig erfolgen, beispielsweise in mechanischer, elektronischer oder sonstiger Weise. So sind in Konsumgüterelektronikgeräten zum Beispiel elektronische Anzeigen auf der Grundlage von Flüssigkristallen, Röhren oder Leuchtdioden üblich, die in der Regel modular als Anzeigemodule gefertigt werden. Der Anzeigebereich ist zumeist als Anzeigefläche ausgebildet, jedoch sind auch andere Geometrien zu finden, etwa bei holografischen Anzeigen. Neben dem Anzeigebereich kann die Anzeigeeinrichtung auch weitere Elemente umfassen, etwa Rahmen- oder Gehäuseelemente und solche zur Regelung und Steuerung der Anzeigefunktion. Die Anzeigeeinrichtung ist erfindungsgemäß vor einer äußeren mechanischen Einwirkung zu schützen.

Zusammen mit dem Klebeverbund als Beschädigungsschutzvorrichtung bildet die Anzeigeeinrichtung ein Anzeigesystem. Ein Anzeigesystem ist eine funktionale Einheit, die zur Anzeige der Informationen dient. Dabei kann das Anzeigesystem ein untergeordneter Teil eines Geräts sein oder als eigenständiges Gerät ausgebildet sein. Neben dem Klebeverbund und der Anzeigeeinrichtung kann ein erfindungsgemäßes Anzeigesystem weitere Komponenten umfassen.

Innerhalb des Anzeigesystems ist der Klebeverbund derart angeordnet, dass die Seite des Klebeverbunds, an der das Flächenelement angeordnet ist, zu der Seite der Anzeigeeinrichtung hin gewandt ist, die zur Anzeige der anzuzeigenden Informationen angepasst ist, nämlich dem Anzeigebereich. In dieser Anordnung kann der Anzeigebereich vollständig durch den Klebeverbund hindurch betrachtet werden, also durch das Durchsichtelement und durch das Flächenelement.

Grundsätzlich kann das Anzeigesystem sowohl ein System im Endzustand (Auslieferungszustand) sein, so dass es bereits in vollem Umfang funktionstüchtig ist, oder aber ein Zwischenprodukt darstellen, das zunächst noch abschließenden Fertigungsschritten zu unterziehen ist, bevor es den Endzustand erreicht. Die abschließenden Fertigungsschritte können etwa ein abschließendes Entfernen des temporären Abdeckelements und ein Verkapseln des Innenraums des Anzeigesystems umfassen, um ein Eindringen von Staub zu verhindern.

Zusätzlich oder anstelle dessen kann auch ein Verkleben mit Schaumstoffklebebändern vorgesehen sein, wodurch eine zusätzliche mechanische Entkopplung der so verklebten Bauteile erreicht werden kann, die einer weiteren Verbesserung der Schlagunempfindlichkeit dient.

Die Oberseite des Flächenelements des Klebeverbunds und die Oberseite der zur Anzeige von Informationen angepassten Seite der Anzeigeeinrichtung können zueinander beabstandet angeordnet sein, etwa mit Hilfe von Abstandhaltern, Distanzstücken oder infolge der Anordnung des Klebeverbunds und der Anzeigeeinrichtung relativ zueinander innerhalb des Gehäuses. Um eine hinreichende Transparenz der Anzeige selbst zu gewährleisten, sollte der mittlere Abstand, also der über die gesamte Fläche gemittelte Abstand beider Oberflächen zueinander im Endprodukt (also ohne temporäre Abdeckungsmittel) höchstens 600 $\mu$m betragen, da ansonsten der Anteil an Reflexionsverlusten zunimmt. Um eine hinreichende mechanische Entkopplung beider Systeme zu erzielen, so dass ein Stoß auf den Klebeverbund nicht unmittelbar auf die Anzeigeeinrichtung übertragen und diese beschädigt wird, sollte der mittlere Abstand außerdem mindestens 30 $\mu$m betragen.

Das erfindungsgemäße Verfahren zum Herstellen eines Anzeigesystems mittels des zuvor beschriebenen Flächenelements umfasst mindestens drei Teilschritte, wobei diese natürlich um weitere Verfahrensschritte ergänzt werden können, sofern erforderlich. Um eine gute Transparenz zu gewährleisten, ist es dabei sinnvoll, die jeweiligen Verfahrensschritte unter staubfreien Bedingungen durchzuführen, beispielsweise im Reinraum oder Reinstraum.

Im ersten Schritt wird eine blasenfreie Verklebung erhalten, indem das entsprechend der jeweiligen Anwendung geschnittene Flächenelement mit dem spröden Flächenkörper vollflächig dauerhaft verbunden wird. Hierfür können alle üblichen Verklebungstechniken eingesetzt werden, wobei besonders gute Ergebnisse beim Laminieren erhalten werden. Hierzu kann zum Beispiel der temporäre Träger von dem Flächenelement entfernt werden und das Flächenelement mit der offen liegenden Klebemasse an den spröden Flächenkörper laminiert werden. Alternativ können auch gestanzte Flächenelemente als Stanzlinge auf den einzelnen Abschnitten der Durchsichtelemente platziert werden.

Zu diesem Zeitpunkt ist der Klebeverbund noch mit dem temporären Abdeckungsmittel verbunden und kann daher in dieser Form gelagert werden; eine Lagerung schließt vorliegend alle Schritte ein, die üblicherweise zwischen zwei Verarbeitungsschritten stattfinden, so auch die Aufbewahrung in einem Lager oder den Transport. Darüber hinaus kann es - um eine optimale vollflächige Verklebung des Flächenelements an dem Durchsichtelement zu erzielen - auch von Vorteil sein, nach dem Laminieren den Klebeverbund bei einer erhöhten Temperatur zu lagern, beispielsweise bei 40 °C, um dabei das Auffließverhalten der Klebemasse nutzen und etwaige Lufteinschlüsse aus dem System zu entfernen.

Abschließend wird das temporäre Abdeckungsmittel entfernt wird und der Klebeverbund mit der Anzeigeeinrichtung in eine feste Anordnung gebracht, wodurch das Anzeigesystem gebildet wird. Dies kann zum Beispiel dadurch erfolgen, dass der Klebeverbund direkt an der Anzeigeeinrichtung befestigt wird oder dass Klebeverbund und Anzeigeeinrichtung jeweils an Halteelementen befestigt werden, die an demselben Gehäuseteil oder an miteinander verbundenen oder zu verbindenden Gehäuseteilen angeordnet sind. Alternativ können Klebeverbund und Anzeigeeinrichtung zuerst in eine feste Anordnung gebracht werden und anschließend erst das temporäre Abdeckungsmittel entfernt werden.

Weitere Vorteile und Anwendungsmöglichkeiten gehen aus den Ausführungsbeispielen hervor, die anhand der beigefügten Zeichnungen im Folgenden näher beschrieben werden sollen. Dabei zeigt die Figur:

**Fig. 1** eine schematische Darstellung eines Längsschnitts durch ein erfindungsgemäßes Flächenelement gemäß einer ersten Ausführungsform,

**Fig. 2** eine schematische Darstellung eines Längsschnitts durch ein erfindungsgemäßes Flächenelement gemäß einer zweiten Ausführungsform,

**Fig. 3** eine schematische Darstellung eines Längsschnitts durch einen Verbund mit einem Flächenelement in einem ersten Verbundaufbau,

**Fig. 4** eine schematische Darstellung eines Längsschnitts durch einen Verbund mit einem Flächenelement in einem zweiten Verbundaufbau,

**Fig. 5** eine schematische Darstellung eines Längsschnitts durch einen Verbund mit einem Flächenelement in einem dritten Verbundaufbau, und

**Fig. 6** eine schematische Darstellung eines Längsschnitts durch einen Verbund mit einem Flächenelement in einem vierten Verbundaufbau.

Die in **Fig. 1** gezeigte erste Aufbauform des Flächenelements weist als Träger 1 eine Polymerfolie auf, als Klebeschichtung 2 eine Haftklebemasse auf Acrylatbasis, als temporäres Abdeckungsmittel 3 eine weitere Polymerfolie und als temporären Träger 4 eine silikonisierte Trennfolie. Die Trägerfolie 1 ist auf einer Seitenfläche gleichmäßig vollflächig mit der Haftklebemasse 2 bedeckt. An der anderen Seitenfläche des Trägers 1 ist die Abdeckungsfolie 3 angeordnet; diese ist infolge ihrer hohen Anfassklebrigkeit direkt mit dem Träger verbunden, ohne dass dazu eine Klebemasse benötigt wird. Die Klebemasse 2 ist zum Schutz vor Verunreinigung und vor einem ungewollten Verkleben mit der Trennfolie vollflächig bedeckt.

Die in **Fig. 2** gezeigte zweite Aufbauform des Flächenelements besitzt im Wesentlichen denselben grundsätzlichen Aufbau wie die in **Fig. 1** dargestellte Aufbauform mit dem Unterschied, dass das einteilige temporäre Abdeckungsmittel 3 aus **Fig. 1** in **Fig. 2** durch ein zweiteiliges temporäres Abdeckungsmittel 3a, 3b ersetzt ist, das als Trägerabschnitt 3a eine Polymerfolie und als Abdeckungsmittelklebemasse 3b des Haftabschnitts eine Acrylat-Haftklebemasse aufweist. Die Abdeckungsmittelklebemasse 3b verbindet hierbei den Abdeckungsmittelträger 3a mit der Trägerfolie 1.

Die in **Fig. 3** gezeigte erste Aufbauform des Verbundelements mit einem Flächenelement und einer Glasplatte als Durchsichtelement 5 weist als Flächenelement ein Flächenelement mit dem in **Fig. 2** dargestellten Aufbau auf; genauso gut lässt sich ein Flächenelement mit einem anderen Aufbau einsetzen, etwa mit dem in **Fig. 1** dargestellten. Bei dem in **Fig. 2** dargestellten Flächenelement wurde die Trennfolie 4 entfernt, um es mittels der Haftklebemasse 2 an der Glasplatte 5 flächig und blasenfrei zu befestigen. Um den so erhaltenen Verbund in dem Anzeigesystem befestigen zu können, ist der Verbund mit einem optionalen Befestigungssystem aus einem doppelseitigen Klebeband 6 und einer zweiten Trennfolie 7 als zweiten temporären Träger versehen, das an der Seite der Glasplatte angeordnet ist, die nicht vollflächig von dem Flächenelement bedeckt ist; diese Seite stellt die spätere Außenseite des Anzeigesystems dar. Das doppelseitige Klebeband 6 wird hierbei zum Schutz vor unbeabsichtigter Verklebung von der zweiten Trennfolie 7 bedeckt und ist vorliegend trägerfrei als Transferklebeband ausgebildet, kann aber auch einen Träger aufweisen. Das Befestigungssystem 6, 7 weist eine besondere Form auf, so dass dieses den optischen Sichtweg der Anzeige nicht verdeckt, und ist vorliegend als Stanzling ausgeführt. Mit Hilfe des Befestigungssystems 6, 7 kann der Verbund über dessen Glasplatte 5 in dem Gerät befestigt werden, das das Anzeigesystem enthält. Die Verbindung zu dem als Anzeigeeinrichtung verwendeten LCD-Modul wird hierbei über das Gehäuse des Gerätes geschaffen, an dem sowohl das LCD-Modul als auch der Verbund fixiert sind (indirekte Verbindung).

Die in **Fig. 4** gezeigte zweite Aufbauform des Verbundelements mit einem Flächenelement und einer Glasplatte als Durchsichtelement 5 weist als Flächenelement ein Flächenelement mit dem in **Fig. 1** dargestellten grundsätzlichen Aufbau auf; genauso gut lässt sich jedoch auch hier ein Flächenelement mit einem anderen Aufbau einsetzen, etwa mit dem in **Fig. 2** dargestellten. Bei dem in **Fig. 1** dargestellten Flächenelement wurde die Trennfolie 4 entfernt, um es mittels der Haftklebemasse 2 an der Glasplatte 5 flächig und blasenfrei zu befestigen. Um den so erhaltenen Verbund in dem Anzeigesystem befestigen zu können, ist der Verbund mit einem optionalen Befestigungssystem aus einem

doppelseitigen Klebeband 6 und einer zweiten Trennfolie 7 als zweiten temporären Träger versehen. Im Unterschied zu dem in **Fig. 3** dargestellten Aufbau ist das Befestigungssystem hier jedoch nicht an der späteren Außenseite des Anzeigesystems vorgesehen, sondern an dessen Innenseite. Dazu ist das Klebeband 6 direkt mit der Trägerfolie 1 des Flächenelements verbunden, so dass die Abdeckfolie 3 von dem Klebeband 6 in der Flächenanordnung umgeben ist. In dieser Anordnung bedeckt also die Abdeckfolie 3 die Trägerfolie 1 nicht vollflächig, sondern nur teilweise. Jedoch auch hier ist das gesamte Sichtfeld des späteren Anzeigesystems von der Abdeckfolie 3 bedeckt. Mit Hilfe des Befestigungssystems 6, 7 kann der Verbund über die Rückseite des Verbunds mit dem Gehäuse des Geräts befestigt werden, das das Anzeigesystem enthält. Alternativ ist es bei diesem Aufbau auch möglich, das Verbundsystem direkt an der Außenseite der Anzeigeeinrichtung zu befestigen. In diesem Fall ist es günstig, wenn das Klebeband eine gewisse Formstabilität aufweist, um als Distanzstück oder Abstandhalter zwischen der Oberfläche des Verbunds und der Oberfläche der Anzeigeeinrichtung zu dienen.

Die in **Fig. 5** gezeigte dritte Aufbauform des Verbundelements mit einem Flächenelement und einer Glasplatte als Durchsichtelement 5 weist als Flächenelement ein Flächenelement mit dem in **Fig. 1** dargestellten grundsätzlichen Aufbau auf; genauso gut lässt sich jedoch auch hier ein Flächenelement mit einem anderen Aufbau einsetzen, etwa mit dem in **Fig. 2** dargestellten. Bei dem in **Fig. 1** dargestellten Flächenelement wurde die Trennfolie 4 entfernt, um es mittels der Haftklebemasse 2 an der Glasplatte 5 flächig und blasenfrei zu befestigen. Um den so erhaltenen Verbund in dem Anzeigesystem befestigen zu können, ist der Verbund mit einem optionalen Befestigungssystem aus einem doppelseitigen Klebeband 6 und einer zweiten Trennfolie 7 als zweiten temporären Träger versehen. Ebenso wie bei dem in **Fig. 4** dargestellten Aufbau ist das Befestigungssystem 6, 7 hier an der Seite des Verbunds vorgesehen, die später zur Innenseite des Anzeigesystems wird. Im Unterschied zu dem in **Fig. 4** dargestellten Aufbau ist das Befestigungssystem jedoch nicht an der Trägerfolie 1, sondern direkt über an Glasplatte 5 befestigt. Demzufolge ist in dieser Anordnung das gesamte Flächenelement von dem Befestigungssystem 6 in der Flächenanordnung umgeben, so dass die Abdeckfolie 3 die Trägerfolie 1 zwar vollflächig bedeckt, das Flächenelement die Glasplatte 5 hingegen nur teilweise. Mit Hilfe des Befestigungssystems 6, 7 kann der Verbund mit seiner Rückseite an dem Gehäuse des Geräts befestigt werden, das das Anzeigesystem enthält. Infolge des bündigen Abschlusses von der Oberseite des Klebebandes 6 und der Oberseite des Trägers 1 ist es bei diesem konkreten Aufbau vorteilhaft, das Verbundsystem nicht unmittelbar an der Anzeigeeinrichtung zu befestigen, da aufgrund des dadurch entstehenden vollflächigen Kontakts zwischen Träger 1 und Anzeigeeinrichtung eine erhöhte Gefahr von Beschädigungen durch äußere Einwirkungen gegeben wäre. Günstiger ist demzufolge die Verwendung einer Rahmenkonstruktion zum Fixieren des Verbundes.

Die in **Fig. 6** dargestellte vierte Aufbauform des Verbundelements ist eine Abwandlung der in **Fig. 5** gezeigten dritten Aufbauform. Im Unterschied zu dem in **Fig. 5** wiedergegebenen Aufbau ist das Klebeband 8 hier als Schaumstoffklebeband ausgebildet und schließt in der Höhe nicht bündig mit dem Träger 1 ab. Hierdurch ist es möglich, den Verbund direkt an der Anzeigeeinrichtung zu fixieren, wobei durch Verwendung des Schaumstoffklebebandes die Oberflächen des Trägers und der Anzeigeeinrichtung voneinander beabstandet sind und gleichzeitig eine Entkopplung bewirkt wird. Anstelle dessen kann dieser Verbund auch an einem Gehäuserahmen befestigt werde.

Untersuchungen zur Transparenz und Verklebungsfestigkeit von Flächenelementen wurden an sechs unterschiedlichen Systemen durchgeführt. Zur Herstellung dieser sechs unterschiedlichen Flächenelementsysteme wurde je eine von drei untersuchten Klebemassen - Polymer 1, 2 und 3 - auf je einem von zwei Trägern - Träger A und Träger B - aufgetragen.

Für die Polymerisation von Polymer 1 wurde ein für radikalische Polymerisationen üblicher 2 L-Glasreaktor mit 32 g Acrylsäure, 168 g n-Butylacrylat, 200 g 2-Ethylhexylacrylat in 300 g eines Gemisches aus Aceton und 2-Propanol im Verhältnis 97:3 befüllt, wobei die Monomere vor der Reaktion in einem Reinigungsschritt von etwaigen Stabilisatorbeimengungen befreit worden waren. Durch fünfundvierzigminütiges Hindurchleiten von Stickstoff wurde die Reaktionsmischung von gelösten Gasen befreit. Zum Initiieren der Reaktion wurde die Reaktionsmischung auf eine Temperatur von 58 ˚C erhitzt und bei dieser Temperatur mit 0,2 g 2,2'-Azobis(2-methylbutyronitril) (Vazo 67® der Firma DuPont) versetzt. Nach der Zugabe wurde das den Reaktor umgebende Heizbad auf eine Temperatur von 75 ˚C erwärmt und die Reaktion konstant bei der sich daraufhin im Reaktor einstellenden Temperatur durchgeführt. Nach einer Reaktionsdauer von 1 h wurden der Reaktionsmischung erneut 0,2 g 2,2'-Azobis(2-methylbutyronitril) hinzugefügt. Nach jeweils 3h und 6 h wurde die Reaktionsmischung mit jeweils 150 g des Gemisches aus Aceton und 2-Propanol verdünnt. Zur Reduktion der in der Reaktionslösung verbliebenen Reste an Initiator wurden nach 8 h und nach 10 h jeweils 0,4 g Di (4-tert-butylcyclohexyl)peroxydicarbonate (Perkadox 16® der Fa. Akzo Nobel) in den Reaktor eingebracht. Nach einer Reaktionszeit von insgesamt 22 h wurde die Reaktion durch Abkühlen des Reaktors auf Raumtemperatur abgebrochen.

Die Polymerisation von Polymer 2 wurde genau so wie für Polymer 1 beschrieben durchgeführt, wobei als Unterschied zu der Synthese von Polymer 1 die Reaktionsmischung anstelle von 32 g Acrylsäure und 168 g n-Butylacrylat jeweils 20 g Acrylsäure, 40 g Methylacrylat und 140 g n-Butylacrylat enthielt (auch diese Monomere waren vor der Reaktion von Stabilisatorbeimengungen befreit worden).

Die so erhaltenen Lösungen der Polymere 1 und 2 wurden unter Rühren mit jeweils 0,3 Gew.-% Aluminium (III)acetylacetonat vermischt und die entstandene Mischung mit Aceton auf einen Feststoffgehalt von 30 % verdünnt.

Für die Polymerisation eines Blockcopolymers (Polymer 3) wurde eine Mischung aus einem Nitroxid und einem Alkoxyamin eingesetzt. Als Nitroxid wurde 2,2,5-Trimethyl-4-phenyl-3-azahexan-3-nitroxid (siehe untenstehende Struktur) eingesetzt, das gemäß einer Literaturvorschrift hergestellt worden war (Journal of American Chemical Society, 1999, 121 (16), 3904).

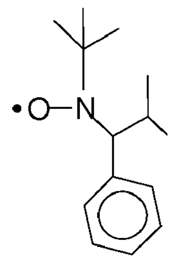

Als Alkoxyamin wurde ein difunktionelles Alkoxyamin verwendet, das analog zu einer aus der Literatur bekannten Versuchsvorschrift hergestellt worden war (Journal of American Chemical Society, 1999, 121 (16), 3904). Hierbei wurden als Ausgangsstoffe 1,4-Divinylbenzol und das zuvor beschriebene Nitroxid eingesetzt. Das resultierende Alkoxyamin besaß die folgende Struktur:

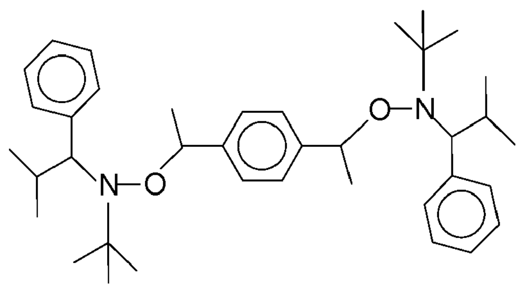

Zur Herstellung von Polymer 3 wurden 0,739 g des difunktionellen Alkoxyamins und 0,0287 g des freien Nitroxids in einem Molverhältnis von 10:1 als Initiatoren eingesetzt. Diese wurden mit einer Mischung aus 128 g destilliertem Isobornylacrylat und 192 g destilliertem 2-Ethylhexylacrylat gemischt, die den oben beschriebenen Monomeren B des späteren Polymerblocks P(B) entsprechen. Die Reaktionsmischung wurde unter wiederholtem Herunterkühlen auf eine Temperatur von -78˚C entgast und anschließend in einem geschlossenen Druckreaktor unter Druck auf eine Temperatur von 110˚C erhitzt. Nach einer Reaktionsdauer von 36 h wurde der Reaktionsmischung als weiteres Monomer 180 g destilliertes o-Methoxystyrol hinzugefügt, das dem oben beschriebenen Monomer A des späteren Polymerblocks P(A) entspricht, und die Reaktionsmischung wurde für weitere 24 h auf dieser Temperatur gehalten.

Zur Beendigung der Reaktion, Isolierung und Aufarbeitung des Reaktionsproduktes wurde die Reaktionsmischung auf Raumtemperatur abgekühlt, das entstandene Blockcopolymer in 750 ml Dichlormethan gelöst und anschließend bei einer Temperatur von - 78˚C in 6,0 L Methanol unter starkem Rühren gefällt. Der Niederschlag wurde vom Überstand mittels einer gekühlten Glasfritte abgetrennt.

Das erhaltene Produkt wurde für die Dauer von 12 h im Vakuumtrockenschrank bei 10 Torr und 45 ˚C aufkonzentriert. Der Brechungsindex $n_d$ der Klebemasse wurde in einem standardisierten Verfahren in einem Abbe-Refraktometer der Firma Krüss Optronic GmbH unter Verwendung von Licht einer Wellenlänge von 550 nm $\pm$ 150 nm für einen Klebemassenfilm mit einer Dicke von 25 $\mu$m bestimmt. Zur Temperierung der Messzelle auf 25 ˚C wurde diese zusammen mit einem Thermostaten der Firma Lauda betrieben. Der Brechungsindex der Klebemasse ergab sich hierbei zu 1,525. Zur Beschichtung von Trägerfolien wurde eine Lösung des Reaktionsprodukts in Toluol eingesetzt.

Als Träger A wurde eine PET-Folie des Typs Lumirror™ T60 der Firma Toray mit einer Stärke von 50 $\mu$m und einer Biegesteifigkeit von 0,01 mNm eingesetzt. Als temporäres Abdeckungsmittel wurde in einem Laminationsschritt ein einseitig verklebbares Haftklebeband vom Typ tesa® 50550 mit einer Klebkraft nach PSTC-1 von 0,1 N/cm auf der PET-Folie mit der Trägerfolie verbunden.

Als Träger B wurde eine PC-Folie des Typs Lexan™ 8010 der Firma GE Plastics mit einer Stärke von 125 $\mu$m und einer Biegesteifigkeit von 0,53 mNm eingesetzt. Die Folie weist auf ihren beiden Seiten je eine Schutzfolie auf, von

denen die eine zunächst trübe erscheint, die andere hingegen klar. Für die weitere Verarbeitung wurde die trübe Schutzfolie von der PC-Folie entfernt. Die transparente Schutzfolie wurde als temporäres Abdeckungsmittel eingesetzt und blieb zunächst mit der PC-Folie verbunden. Diese transparente Schutzfolie wies eine Biegesteifigkeit von 0,002 mNm auf.

Zur Herstellung der Proben wurde jeweils ein Polymer auf die nicht bedeckte Seite eines Trägers mittels eines Streichbalkens aus der Lösung aufgetragen und das Lösungsmittel anschließend verdampft. Das so erhaltene Flächenelement wurde für 10 min bei einer Temperatur von 120 ˚C getrocknet. Der nach dem Trocknen erzielte Masseauftrag betrug 100 g/m$^2$.

Für Probe 1 A wurde Polymer 1 auf Träger A aufgetragen, für Probe 1 B Polymer 1 auf Träger B, für Probe 2A Polymer 2 auf Träger A, für Probe 2B Polymer 2 auf Träger B, für Probe 3A Polymer 3 auf Träger A und für Probe 3B Polymer 3 auf Träger B.

Im Folgenden sind zunächst einige Untersuchungen solcher Eigenschaften beschreiben, die die grundsätzliche Eignung der Proben als optisch transparente Splittersicherungseinrichtung betreffen. Anschließend wird auf Versuche Bezug genommen, aus denen sich die besondere Wirkung des erfindungsgemäßen Flächenelements erkennen lässt.

Die Klebkraft der Proben auf einem Glassubstrat (Schälfestigkeit) wurde in mit einem Verfahren gemäß PSTC 1 bestimmt. Hierzu wurde ein Streifen des Flächenelements mit einer Breite von 2 cm derart auf eine Glasplatte aufgebracht, dass lediglich ein freier Endabschnitt des Streifens nicht mit der Oberfläche der Glasplatte in Kontakt stand. Der mit dem Glassubstrat in Kontakt stehende Bereich des Klebestreifens wurde mit Hilfe einer Rolle mit einer Masse von mit einer 2 kg an das Glassubstrat durch dreimaliges Überrollen definiert angepresst, wobei jedes Überrollen zwei jeweils in gegenläufigen Vorschubrichtungen belastende Rollendurchgänge umfasste. Anschließend wurde das temporäre Abdeckungsmittel mit der Hand abgezogen.

Zur eigentlichen Messung der Klebkraft wurde die Glasplatte mit dem derart befestigten Flächenelement ortsfest fixiert. Das Flächenelement wurde mit seinem freien Ende an einer Zugprüfmaschine befestigt und 10 min nach dem Verkleben (Messung der Sofortklebkraft) mittels der Zugprüfmaschine unter einem Schälwinkel von 180 ˚ mit einer Vorschubgeschwindigkeit von 300 mm/min abgezogen. Die maximale Kraft, bei der noch kein Lösen der Verklebung beobachtet wurde, entspricht der Klebkraft auf dem entsprechenden Haftgrund; diese ist in N/cm angegeben.

Die Ergebnisse sind untenstehend in Tabelle 1 wiedergegeben.

Tabelle 1

| Probe | Klebkraft auf Glas [N/cm] |
|---|---|
| 1A | 7,8 |
| 1B | 8,2 |
| 2A | 8,1 |
| 2B | 8,5 |
| 3A | 5,5 |
| 3B | 6,3 |

Aus Tabelle 1 ist ersichtlich, dass alle Proben eine hohe Klebkraft auf dem Glassubstrat aufwiesen. Infolge dieser guten Haftung sind somit alle Proben für Verklebungen auf Glas geeignet.

Zur weiteren Untersuchung wurden die Proben mit Hilfe einer Gummiwalze auf eine Glasscheibe vom Typ D 263 T (Borosilikatglas von 1,1 mm Stärke der Firma Schott mit einem Brechungsindex $n_d$ von 1,5231) blasenfrei aufgebracht. Der Andruck der Proben an das Glassubstrat erfolgte für eine Dauer von 10 s mit einem Anpressdruck von 40 N/cm$^2$. Anschließend wurde das temporäre Abdeckungsmittel mit der Hand abgezogen.

Zur Überprüfung der Eignung der Probe als Splittersicherungseinrichtung wurde der Verbund aus Probe und Glassubstrat einem Kugelfalltest unterzogen. Hierzu wurde ein Abschnitt der jeweiligen Probe mit einer Breite von 4 cm und einer Länge von 6 cm auf einer Verklebungsfläche wie vorstehend beschrieben blasenfrei befestigt. Der Verbund wurde nach Entfernen des temporären Abdeckungsmittels für eine Dauer von 48 h bei einer Umgebungstemperatur von 23 ˚C und einer relativen Luftfeuchtigkeit von 50 % zum Equilibrieren der Proben gelagert. Zur Durchführung des eigentlichen Tests wurde die Masse des Verbunds gravimetrisch bestimmt und der Verbund danach in einer Aufnahme derart fixiert, dass jeweils die Seitenfläche mit der Glasseite nach oben und die Seitenfläche mit der Probe nach unten horizontal ausgerichtet war. In einem Abstand von 1 m oberhalb des Verbunds wurde eine Stahlkugel mit einer Masse von 63,7 g zunächst fixiert und schließlich mittels einer Auslöseapparatur freigesetzt. Nach einer Fallhöhe von 1 m traf die Stahlkugel auf die Glasseite des Verbunds auf. Nach dem Aufprall wurde die Masse des Verbunds erneut mittels einer Waage bestimmt. Der Kugelfalltest galt als bestanden (und die Probe somit als Splittersicherungseinrichtung

geeignet), wenn die Massedifferenz der Probe vor und nach dem Aufprall der Kugel jeweils weniger als 5 Gew.-% betrug (bezogen auf die Gesamtmasse des Glases), so dass sich insgesamt nur wenige der beim Aufprall der Kugel auf den Verbund entstandenen Glassplitter aus dem Verbund und aus der Verklebung gelöst hatten.

Die Ergebnisse des Kugelfalltests sind untenstehend in Tabelle 2 wiedergegeben.

Tabelle 2

| Probe | Massendifferenz [Gew.-% der Glasmasse] |
|---|---|
| 1A | < 2 |
| 1B | <2 |
| 2A | < 2 |
| 2B | < 2 |
| 3A | < 2 |
| 3B | < 2 |

Tabelle 2 ist zu entnehmen, dass in sämtlichen Proben beim Aufprall der Stahlkugel nur wenige Splitter aus der Verklebung heraus gelangten, so dass alle Proben eine gute Splittersicherung bieten.

Die Transmission der Proben wurde in einem Verfahren gemäß ASTM D1003 für Licht einer Wellenlänge von 550 nm bestimmt. Auch hierbei wurden die Proben in dem zuvor beschriebenen Verbund aus dem Flächenelement und der Glasplatte jeweils nach Entfernen des temporären Abdeckungsmittels untersucht.

Die Ergebnisse der Transmissionsmessung sind untenstehend in Tabelle 3 wiedergegeben.

Tabelle 3

| Probe | Transmission [%] |
|---|---|
| 1A | 78 |
| 1B | 87 |
| 2A | 76 |
| 2B | 88 |
| 3A | 78 |
| 3B | 88 |

Tabelle 3 ist zu entnehmen, dass alle Proben eine Transmission von mehr als 75 % aufwiesen und somit optisch transparent waren, wobei sich insbesondere die Proben mit einem PC-Träger mit einer Transmission von mehr als 85 % als hochtransparent herausgestellt haben.

Schließlich wurde die Lichtbeständigkeit der Proben in dem oben beschriebenen Verbund mit einer Glasplatte untersucht. Hierfür wurde der zuvor beschriebene Verbund von einer Größe von 4 cm x 20 cm nach Entfernen des temporären Abdeckungsmittels zur Hälfte mit einer lichtundurchlässigen Blende aus Pappe abgedeckt. Der derart halb abgedeckte Verbund wurde für eine Dauer von 300 h in einer Beleuchtungsapparatur einer Bestrahlung mit polychromatischem Licht einer intensiven Glühlampe (Osram Ultra Vitalux; 300 W, jeweils in einem Abstand von 50 cm zur Probe angeordnet) unterzogen, die eine Einwirkung von Sonnenlicht auf die Probe simulieren sollte. Nach Beendigung der Lichtexposition wurde die Blende entfernt und der visuelle Eindruck der beleuchteten Teilfläche mit dem der unbestrahlten Teilfläche qualitativ verglichen, wobei insbesondere auf etwaige Verfärbungen geachtet wurde. Die Probe galt als lichtbeständig, wenn keine Verfärbung infolge der Beleuchtung beobachtet wurden.

Die Ergebnisse des Lichtbeständigkeitstests sind untenstehend in Tabelle 4 wiedergegeben.

Tabelle 4

| Probe | Lichtbeständigkeit |
|---|---|
| 1A | Bestanden |

(fortgesetzt)

| Probe | Lichtbeständigkeit |
|---|---|
| 1B | Bestanden |
| 2A | Bestanden |
| 2B | Bestanden |
| 3A | Bestanden |
| 3B | Bestanden |

Wie aus Tabelle 4 erkennbar ist, waren alle Proben gut lichtbeständig und wiesen hohe Alterungsstabilitäten auf. Insbesondere traten keine Verfärbungen auf, die den Strahlengang des transmittierten Lichtes beeinträchtigen könnten und dadurch etwa geometrische Verzerrungen oder farbliche Änderungen hervorrufen könnten. Demzufolge sind sämtliche Proben auch für Langzeitanwendungen geeignet.

Obenstehende Versuche zeigen, dass sämtliche Proben grundsätzlich als optisch transparente Splittersicherungseinrichtung unter realen Bedingungen geeignet sind.

Zur Untersuchung, inwieweit das erfinderische Flächenelement tatsächlich geeignet ist, eine Beschädigung des Trägers zu verhindern, wurden sämtliche Proben im Verbund mit einer Glasscheibe (siehe oben) einem anwendungsbezogenen technischen Test unterzogen. Hierfür wurde der Verbund vor Entfernen des temporären Abdeckungsmittels jeweils zehn Mal über einen Stahlkörper von 20 cm Länge geführt, dessen Oberfläche angeraut war (Ra = 0,8 μm). Während der Bewegung des Verbunds über den Stahlkörper wurde der Verbund rückseitig mit einer Masse von 1 kg belastet. Der Verbund war hierbei mit dem temporären Abdeckungsmittel nach unten ausgerichtet, so dass sich das temporäre Abdeckungsmittel zwischen der Oberseite des Trägers und dem Stahlkörper befand. Anschließend wurde das jeweilige temporäre Abdeckungsmittel von der Trägerseite abgezogen und die Oberfläche des Trägers visuell begutachtet sowie die über einen Flächebereich gemittelte Transmission bestimmt. Hierbei war zu erkennen, dass die temporären Abdeckungsmittel rückstandsfrei von der Trägerfolie entfernt wurden. Bei keiner der Proben wies die Oberfläche des Trägers Kratzer auf. Zudem konnte keine Änderung der Transmission beobachtet werden. In Vergleichsmessungen, die bei Systemen ohne temporäre Abdeckungsmittel durchgeführt wurden, wies die Oberfläche des Trägers hingegen deutliche Kratzspuren auf.

Demzufolge ist das erfindungsgemäße Flächenelement hervorragend als beschädigungsarm verarbeitbares optisch transparente Splittersicherungseinrichtung einsetzbar.

## Patentansprüche

1. Ausschließlich einseitig verklebbares Flächenelement umfassend einen Träger (1) und eine Klebeschichtung (2), wobei der Träger (1) parallel zu seiner Hauptausdehnung eine erste Seitenfläche sowie eine zweite Seitenfläche aufweist und
   die Klebeschichtung (2) an der ersten Seitenfläche des Trägers (1) angeordnet und zu einem dauerhaften Verbinden des Flächenelements mit einem bei Bruch mittels des Flächenelements zusammenzuhaltenden spröden Flächenkörpers angepasst ist,
   **dadurch gekennzeichnet, dass**
   das Flächenelement ein temporäres Abdeckungsmittel (3; 3a/3b) mit einem Trägerabschnitt (3a) und einem Haftabschnitt (3b) aufweist, wobei der Trägerabschnitt (3a) eine Biegesteifigkeit von höchstens 0,01 mNm aufweist, bevorzugt von höchstens 0,005 mNm und besonders bevorzugt von höchstens 0,004 mNm, und wobei der Trägerabschnitt (3a) mittels des Haftabschnitts (3b) mit dem Träger (1) an der zweiten Seitenfläche des Trägers (1) derart rückstandsfrei ablösbar verbunden ist, dass das temporäre Abdeckungsmittel (3; 3a/3b) eine die zweite Seitenfläche des Trägers (1) beschädigungsfrei haltende Abdeckung bildet.

2. Flächenelement nach Anspruch 1, **dadurch gekennzeichnet, dass** das Flächenelement vollflächig für sichtbares Licht hochtransparent ausgebildet ist, wobei es für Licht einer Wellenlänge von 550 nm eine Transmission von mehr als 80 % aufweist, insbesondere von mehr als 85 %.

3. Flächenelement nach Anspruch 1 oder 2, **dadurch gekennzeichnet, dass** zumindest eine Seitenfläche des Trägerabschnitts (3a) stabil gegenüber mechanischer Beanspruchung ausgebildet ist.

**4.** Flächenelement nach einem der Ansprüche 1 bis 3, **dadurch gekennzeichnet, dass** zumindest eine Seitenfläche des Trägerabschnitts (3a) beständig gegenüber Chemikalien ausgebildet ist.

**5.** Flächenelement nach einem der Ansprüche 1 bis 4, **dadurch gekennzeichnet, dass** der Trägerabschnitt (3a) mit dem Haftabschnitt (3b) identisch ist, so dass das temporäre Abdeckungsmittel (3) direkt und klebemassenlos mit dem Träger (1) rückstandsfrei ablösbar verbunden ist.

**6.** Flächenelement nach einem der Ansprüche 1 bis 4, **dadurch gekennzeichnet, dass** der Haftabschnitt (3b) eine Abdeckungsmittelklebemasse umfasst, die das temporäre Abdeckungsmittel (3; 3a/3b) mit dem Träger (1) rückstandsfrei ablösbar verbindet.

**7.** Flächenelement nach einem der Ansprüche 1 bis 6, **dadurch gekennzeichnet, dass** das Abdeckungsmittel (3; 3a/3b) an der zweiten Seitenfläche des Trägers (1) eine Klebkraft von weniger als 1,0 N/cm aufweist, bevorzugt von weniger als 0,5 N/cm, besonders bevorzugt von weniger als 0,1 N/cm.

**8.** Flächenelement nach einem der Ansprüche 1 bis 7, **dadurch gekennzeichnet, dass** die Klebeschichtung (2) für eine Klebkraft auf dem spröden Flächenkörper von mehr als 3,5 N/cm angepasst ist, bevorzugt von mehr als 4,0 N/cm.

**9.** Flächenelement nach einem der Ansprüche 1 bis 8, **dadurch gekennzeichnet, dass** die Klebeschichtung (2) eine Haftklebemasse umfasst.

**10.** Flächenelement nach einem der Ansprüche 1 bis 8, **dadurch gekennzeichnet, dass** die Klebeschichtung (2) eine hitzeaktiviert verklebende Klebemasse umfasst.

**11.** Flächenelement nach einem der Ansprüche 1 bis 10, **dadurch gekennzeichnet, dass** die Klebeschichtung (2) eine Klebemasse mit einem Brechungsindex $n_d$(20 °C) von mehr als 1,43 aufweist, bevorzugt von mehr als 1,47.

**12.** Flächenelement nach einem der Ansprüche 1 bis 11, **dadurch gekennzeichnet, dass** das Flächenelement einen von dem temporären Abdeckungsmittel (3; 3a/3b) verschiedenen temporären Träger (7) umfasst, wobei der temporäre Träger (7) an der Klebeschichtung (2) angeordnet und mit der Klebeschichtung (2) rückstandsfrei ablösbar verbunden ist.

**13.** Verwendung eines Flächenelements nach einem der Ansprüche 1 bis 11 als Splittersicherungseinrichtung für einen spröden Flächenkörper, die bei Bruch des Flächenkörpers den Flächenkörper zumindest im wesentlichen zusammen hält und so einer Vereinzelung von Bruchstücken des Flächenkörpers entgegenwirkt.

**14.** Klebeverbund aus einem Flächenelement nach einem der Ansprüche 1 bis 11 und einem Durchsichtelement (5), **dadurch gekennzeichnet, dass** das Durchsichtelement (5) mit dem Flächenelement über die Klebeschichtung (2) des Flächenelements dauerhaft verbunden ist.

**15.** Klebeverbund nach Anspruch 14, **dadurch gekennzeichnet, dass** das Durchsichtelement (5) zumindest einen Teilbereich aus Glas aufweist, der als spröder Flächenkörper für das Verbinden mit dem Flächenelement angepasst ist.

**16.** Verwendung eines Klebeverbunds nach Anspruch 14 oder 15 als Beschädigungsschutzvorrichtung für eine Anzeigeeinrichtung, die einer Beschädigung der Anzeigeeinrichtung bei äußerer mechanischer Einwirkung entgegenwirkt.

**17.** Anzeigesystem mit einem Klebeverbund nach Anspruch 14 oder 15 und einer Anzeigeeinrichtung, **dadurch gekennzeichnet, dass** der Klebeverbund im Anzeigesystem derart angeordnet ist, dass die Seite des Klebeverbunds, an der das Flächenelement angeordnet ist, zu der Seite der Anzeigeeinrichtung hin gewandt ist, die zur Anzeige der anzuzeigenden Informationen angepasst ist.

**18.** Anzeigesystem nach Anspruch 17, **dadurch gekennzeichnet, dass** das Flächenelement und die zur Anzeige von Informationen angepasste Seite der Anzeigeeinrichtung derart zueinander beabstandet angeordnet sind, dass der mittlere Abstand mindestens 30 μm und höchstens 600 μm beträgt.

**19.** Verfahren zum Herstellen eines Anzeigesystems nach Anspruch 17 oder 18 mittels eines Flächenelements nach einem der Ansprüche 1 bis 12, wobei die Klebeschichtung (2) des Flächenelements dauerhaft über eine blasenfreie

Verklebung mit dem spröden Flächenkörper unter in wesentlichen staubfreien Bedingungen zu einem Klebeverbund nach einem der Ansprüche 14 oder 15 verbunden wird, nach einem Lagern des Klebeverbundes das temporäre Abdeckungsmittel (3; 3a/3b) entfernt wird und der Klebeverbund mit der Anzeigeeinrichtung in eine feste Anordnung gebracht wird.

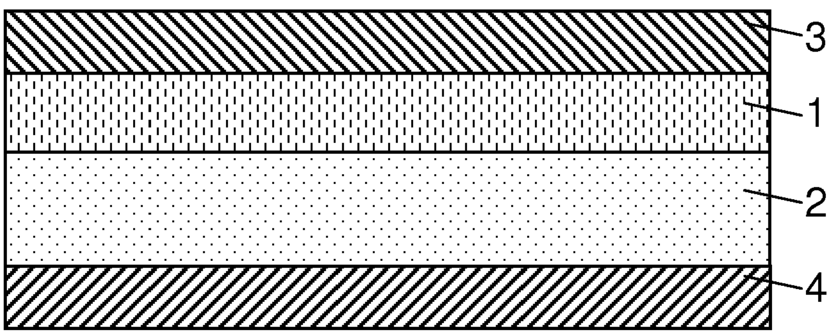


Fig. 1

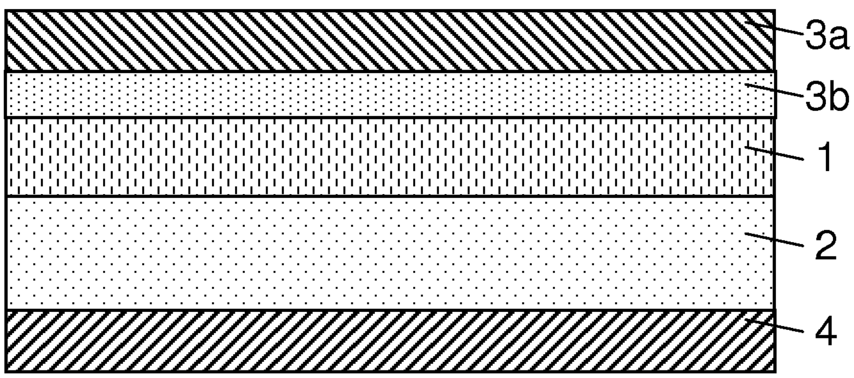


Fig. 2

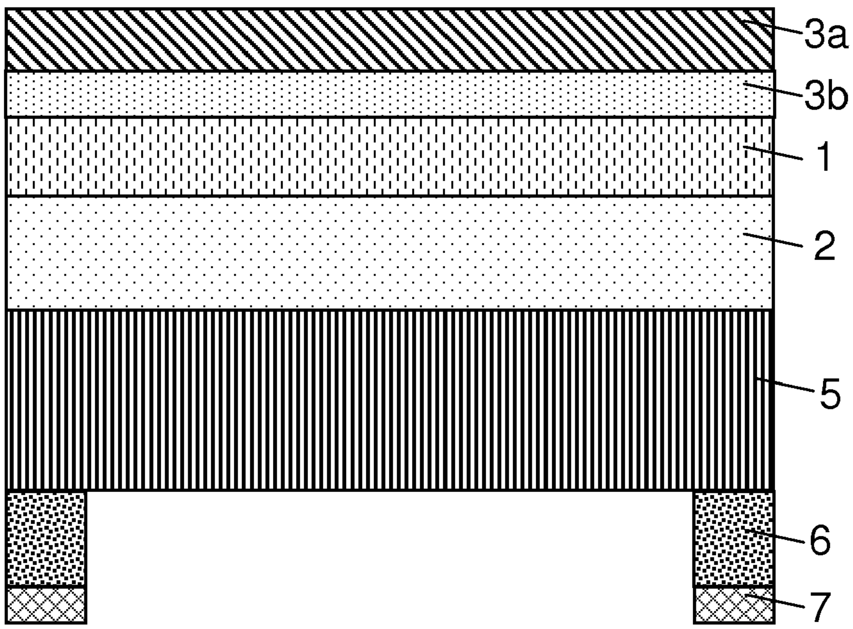


Fig. 3

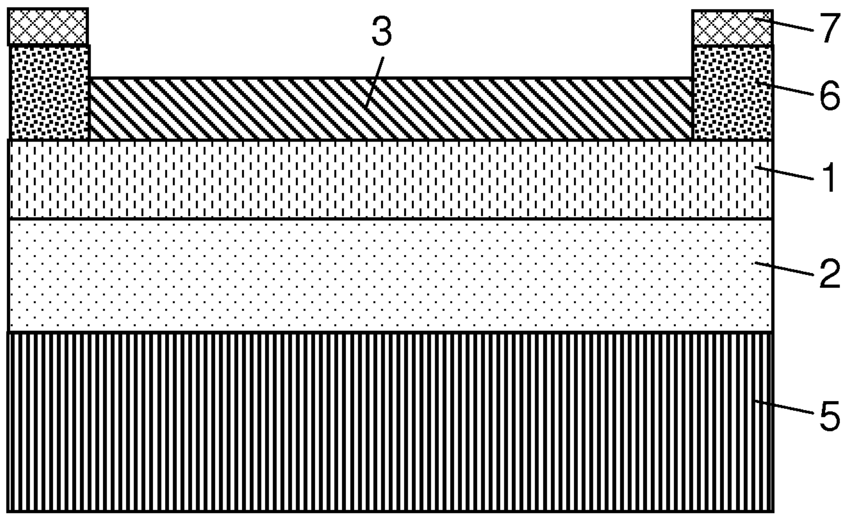


Fig. 4

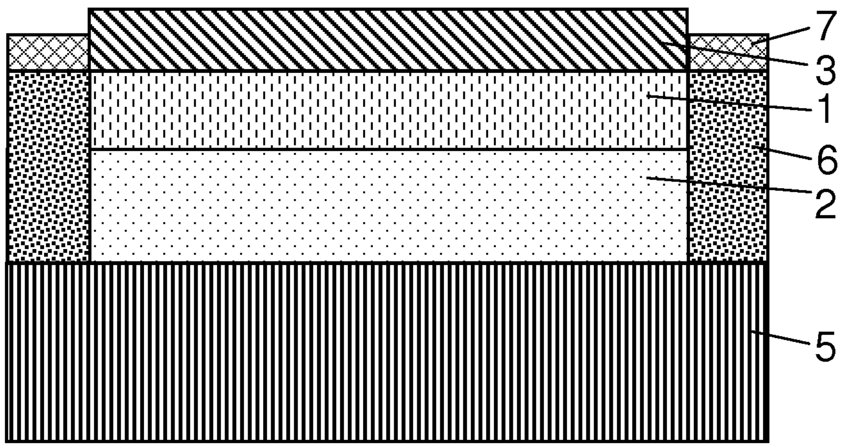


Fig. 5

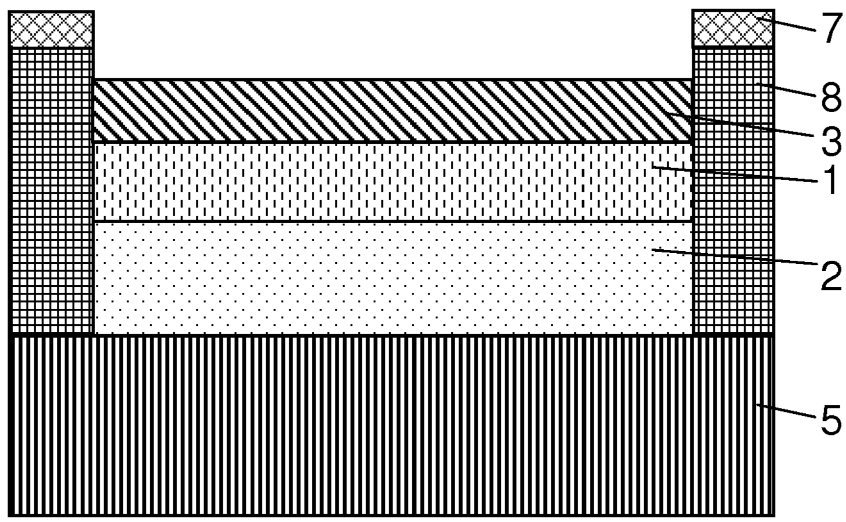


Fig. 6

Europäisches Patentamt
European Patent Office
Office européen des brevets

# EUROPÄISCHER RECHERCHENBERICHT

Nummer der Anmeldung
EP 08 10 5290

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 02/12404 A (3M INNOVATIVE PROPERTIES CO [US]) 14. Februar 2002 (2002-02-14)<br>* Zusammenfassung *<br>* Seite 4, Zeilen 8-15 *<br>* Seite 8, Zeile 24 - Seite 9, Zeile 28 *<br>* Seite 11, Zeilen 1-27 *<br>* Seite 20, Zeilen 11-21; Ansprüche 1,9,12,16-18; Abbildungen 3-6 *<br>----- | 1-19 | INV.<br>C09J7/02<br>B32B7/12 |
| X | EP 1 486 935 A (MATSUSHITA ELECTRIC IND CO LTD [JP]; ASAHI GLASS CO LTD [JP])<br>15. Dezember 2004 (2004-12-15)<br>* Ansprüche; Beispiele 1,11,21 *<br>----- | 1-19 | |

RECHERCHIERTE SACHGEBIETE (IPC)
C09J
B32B

Der vorliegende Recherchenbericht wurde für alle Patentansprüche erstellt

| Recherchenort | Abschlußdatum der Recherche | Prüfer |
|---|---|---|
| München | 16. Dezember 2008 | Meier, Stefan |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 08 10 5290

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-12-2008

| Im Recherchenbericht angeführtes Patentdokument | Datum der Veröffentlichung | Mitglied(er) der Patentfamilie | Datum der Veröffentlichung |
|---|---|---|---|
| WO 0212404 A | 14-02-2002 | AU 8114101 A | 18-02-2002 |
| | | AU 8120201 A | 18-02-2002 |
| | | AU 2001281141 B2 | 01-09-2005 |
| | | AU 2001281202 B2 | 27-07-2006 |
| | | WO 0213224 A2 | 14-02-2002 |
| EP 1486935 A | 15-12-2004 | AU 2003211283 A1 | 09-09-2003 |
| | | CA 2477416 A1 | 28-08-2003 |
| | | CN 1639757 A | 13-07-2005 |
| | | WO 03071507 A1 | 28-08-2003 |
| | | US 2005077826 A1 | 14-04-2005 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4874671 A
- WO 9801478 A1
- US 4581429 A
- WO 9813392 A1
- EP 735052 A1
- WO 9624620 A1
- WO 9844008 A1
- DE 19949352 A1
- EP 824110 A1
- EP 0824111 A1
- EP 826698 A1
- EP 841346 A1
- EP 850957 A1
- US 5945491 A
- US 5854364 A
- US 5789487 A


### In der Beschreibung aufgeführte Nicht-Patentliteratur


- **FOUASSIER.** Photoinitiation, Photopolymerization and Photocuring: Fundamentals and Applications. Hanser-Verlag, 1995
- **CARROY et al.** Chemistry and Technology of UV and EB Formulation for Coatings, Inks and Paints. SITA, 1994
- Handbook of Pressure Sensitive Adhesive Technology. 1989
- **T. G. FOX.** *Bull. Am. Phys. Soc.,* 1956, vol. 1, 123
- **HOUBEN-WEYL.** Methoden der Organischen Chemie. vol. E 19a, 60-147
- *Macromolecules,* 1995, vol. 28, 7886
- **FOUASSIER.** Photoinititation, Photopolymerization and Photocuring: Fundamentals and Applications. Hanser-Verlag, 1995
- *Journal of American Chemical Society,* 1999, vol. 121 (16), 3904